# EUROPÄISCHE PATENTSCHRIFT

(11) **EP 2 216 233 B1**
(45) Veröffentlichungstag und Bekanntmachung des Hinweises auf die Patenterteilung: **18.04.2012**
(21) Anmeldenummer: 09001749.2
(22) Anmeldetag: 09.02.2009
(51) Int. Cl.: B62D 5/00

(54) **Getriebe für Fahrzeuglenkvorrichtung**
Drive for vehicle steering device
Châssis pour dispositif de direction de véhicule

(43) Veröffentlichungstag der Anmeldung: 11.08.2010
(73) Patentinhaber: ThyssenKrupp Presta Aktiengesellschaft, 9492 Eschen (LI)
(72) Erfinder: Gmünder, Ralf, 9050 Appenzell (CH); Konrad, Johann, 9453 Eichberg (CH)
(74) Vertreter: Wegmann, Urs

(56) Entgegenhaltungen:
- EP-A- 0 931 714
- EP-A- 1 584 541
- WO-A-2008/116331

## Beschreibung

Die Erfindung betrifft eine Fahrzeuglenkvorrichtung für Kraftfahrzeuge mit einem Antrieb zur Unterstützung der Lenkvorrichtung, der über eine Getriebeanordnung mit einer Abtriebswelle mit einem Lenkgetriebe verbunden ist, gemäss dem Oberbegriff des Patentanspruches 1 oder 2.

Derartige Antriebe mit einem Getriebe werden in Fahrzeuglenkvorrichtungen eingesetzt für elektrisch unterstützte Lenkhilfen und für Drehzahlüberlagerungseinrichtungen.
Bei der elektrisch unterstützten Lenkhilfe wird eine Servokraft von einem Elektromotor mit nachgeschaltetem Untersetzungsgetriebe entsprechend dem Ausschlag des Lenkrades auf die Lenkwelle oder auf die querliegende Zahnstange des Lenksystemes eingekoppelt. Dadurch wird der Kraftaufwand am Steuerrad zur Lenkung des Fahrzeuges verringert. Es ist auch möglich mit Hilfe elektronischer Steuermittel, das Hilfskraftangebot zum richtigen Zeitpunkt und nach gewünschtem Verhalten bereitzustellen, beispielsweise auch entsprechend stärker bei stillstehendem Fahrzeug. Derartige elektrisch unterstützten Lenkhilfen werden deshalb heute vermehrt eingesetzt.

Ein weiterer wichtiger Einsatzbereich derartiger Elektromotor - Getriebeanordnungen in Lenksystemen betrifft insbesondere die Drehzahlüberlagerungseinrichtung mit Hilfsantrieb für ein Lenksystem für nicht spurgebundene Kraftfahrzeuge die, die Drehzahlen des Hilfsantriebes und der Steuereingriffe am Steuerrad durch den Fahrer überlagert und auf die Lenkbewegung der Räder überträgt.
Derartige Drehzahlüberlagerungseinrichtungen werden im Stand der Technik, soweit sie für Lenkungssysteme angewendet werden, auch als Drehwinkelüberlagerungseinrichtungen bezeichnet. Drehzahlüberlagerung bzw. Drehwinkelüberlagerung sind Synonyme.

Im Stand der Technik sind eine Reihe Systeme bekannt zur Ausbildung von elektrischen Hilfsantrieben mit Getriebeanordnung für den Einsatz in vorerwähnten Anordnungen.

Die Offenlegungsschrift EP 1 584 541 A1 bezieht sich auf eine Lenksteuervorrichtung, die das Lenken eines Lenkrades unter Benutzung eines Elektromotors elektrisch steuert. Es soll ein kompakter mechanischer Lenkwinkelmechanismus bereitgestellt werden, bei dem ein erlaubbarer Drehbereich eines Lenkrades von ±180 Grad oder mehr eingestellt wird mit Hilfe eines Getriebemechanismus und einem Motor mit geringer Leistungsabgabe.

Diese Aufgabe soll gelöst werden durch eine Lenksteuervorrichtung, in der eine mit einem Lenkrad gekoppelte Lenkwelle von einem Schwenkmechanismus zum Drehen eines sich drehenden Rades mechanisch getrennt ist, ein Steuerungswinkel des Steuerungsrades erkannt wird, und der Drehmechanismus das sich drehende Rad um einen Drehwinkel entsprechend dem Lenkwinkel dreht, und die folgendes umfasst:

Einen hyperzykloidalen Mechanismus, der sich in einem Gehäuse entsprechend der Drehung des Lenkrades dreht, während er mit einem internen Zahnrad kämmt, einen Oldham-Koppelmechanismus zum Gewinnen einer Selbst-Drehbewegung einer Drehscheibe, und einen Dreh-Regelmechanismus durch Eingriff eines in der Drehscheibe ausgebildeten Schlitzes und einem aus dem Gehäuse vorspringenden Vorsprung.

Im weiteren weist der hyperzykloidale Mechanismus ein Zahnrad auf mit einer Aussenverzahnung, das durch ein Lager auf einem äusseren Umkreis einer exzentrischen Scheibe drehbar bereitgestellt ist, wobei die Scheibe auf einer mit dem Lenkrad gekoppelten Drehwelle montiert ist, und dem in dem Gehäuse ausgebildeten, eine Innenverzahnung aufweisenden Zahnrad, und dass dieser Mechanismus durch Eingriff des eine Innenverzahnung aufweisenden Zahnrads mit dem eine Aussenverzahnung aufweisenden Zahnrad aufgebaut ist. Der Oldham-Koppelmechanismus koppelt die Drehscheibe mit dem exzentrisch rotierbaren aussenverzahnten Zahnrad.

Drehzahlüberlagerungsgetriebe werden oft auch durch ein Planetengetriebe oder auch durch ein Schneckenradgetriebe realisiert.
So ist in der DE19823721A1 eine derartige Drehzahlüberlagerungseinrichtung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlüberlagerungen dargestellt werden. Diese im Stand der Technik gezeigte Lösung besitzt aber einige entscheidende Nachteile. Derartige Getriebe bestehen aus einer Vielzahl von Bauteilen. Es werden zwei Hohlzahnradkränze bzw. Planetengetriebe benötigt. Die Herstellung der Einzelteile ist sehr aufwändig und teuer. Die Vielzahl der Zahneingriffe führt zu sehr hohen Genauigkeitsanforderungen. Die inhärent vorhandene hohe Geräuschbildung derartiger Getriebe ist bei dieser Anwendung unerwünscht. Weiter muss die gesamte Einrichtung , inklusive Motorgehäuse, vom Fahrer beim Steuern mit gedreht werden.
Ein weiterer Nachteil besteht zudem in der aufwendigen Einkopplung der elektrischen Energie für den Elektromotor.

Eine weitere bekannte Winkelüberlagerungsgetriebeeinheit für eine Aktivlenkung eines Fahrzeuges wird in der Deutschen Offenlegungsschrift DE 10 2007 005 148 A1 beschrieben. Das Getriebe umfasst einen Ausgang zum Antreiben der Ausgangswelle, die mit dem Lenkgetriebe verbunden ist, einen ersten Eingang, der durch die Eingangswelle mit dem Steuerrad angetrieben wird, und einen zweiten Eingang, der durch einen Elektromotor angetrieben wird. Das Getriebe ist als Planetengetriebe ausgebildet mit zumindest einem Sonnenrad, zumindest einem mit einem Planetenträger gekoppelten Planetenrad und zumindest einem Hohlrad oder der Planetenträger bildet den Ausgang des Planetengetriebes und ist drehfest mit der Ausgangswelle verbunden.

In einem weiteren Stand der Technik, der DE19852447A1, wird eine Lösung zur Drehzahlüberlagerung vorgestellt, bei der ein Elektromotor über einen Schnekkenantrieb an das, als Planetengetriebe ausgebildete, Überlagerungsgetriebe angekoppelt ist. Hier ist die Getriebeeinheit karosseriefest angeordnet. Allerdings sind auch mit dieser Lösung eine Reihe von Nachteilen verbunden. Die Einrichtung benötigt viele Einzelteile, deren Herstellung aufwändig und teuer und die Anforderungen an die Herstelltoleranzen entsprechend hoch ist.

In der WO 2006/072186 A1 wird eine Drehzahlüberlagerungseinrichtung vorgestellt welche bereits recht kompakt ist und weniger Bauteile aufweist. Das Überlagerungsgetriebe besteht aus einer Zahnscheibe, die mit einer mit dem Steuerrad gekoppelten Antriebswelle verbunden ist und einer weiteren Zahnscheibe, die mit der Abtriebswelle verbunden ist wobei die beiden Zahnscheiben eine unterschiedliche Zähnezahl aufweisen und ein weiteres Zahnrad in beide Verzahnungen eingreift, welches an einem Rotor in sich um eine eigene Achse drehbar exzentrisch angeordnet ist, wobei der Rotor um die Wellenlängsachse von einem Hilfsantrieb angetrieben wird. Durch die Wahl der unterschiedlichen Zähnezahl kann das Übersetzungsverhältnis eingestellt werden.

Nachteil dieser vorgenannten Beispiele aus dem Stand der Technik ist, dass ihr Betrieb mit einer erheblichen unerwünschten Geräuschbelastung verbunden ist.

Um dieses Problem der Geräuschentwicklung zu verbessern wurde eine Fahrzeuglenkvorrichtung mit einem Kurvenscheibengetriebe entwickelt, wie dies in der WO 2008/116331 dargestellt ist. Die Fahrzeuglenkvorrichtung mit einem Antrieb ist über ein Kurvenscheibengetriebe mit einer zweiten Welle verbunden. Das Kurvenscheibengetriebe umfasst folgende Elemente:
- mindestens eine um die Längsachse der zweiten Welle exzentrisch rotierbar angeordnete Kurvenscheibe mit einer wellenartigen Aussenkontur und einer Zentralöffnung um welche Bohrungen angeordnet sind;
- einen ersten Träger, an einer ersten Welle angeordnet, dessen Achse in der Längsachse liegt mit am Träger kreisförmig angeordneten Mitnehmerbolzen, welche in die Bohrungen eingreifen;
- eine Rotorwelle koaxial um die erste Welle drehbar angeordnet verbunden mit dem Antrieb, die mindestens einen Exzenter trägt mit einer Exzentrizität eingreifend in die Zentralöffnung einer zugeordneten Kurvenscheibe zur Erzeugung einer rotierenden lateral taumelnden Bewegung der mindestens einen Kurvenscheibe;
einen zweiten Träger angeordnet an einer zweiten Welle, dessen Achse in der Längsachse liegt, mit am Träger kreisförmig angeordneten Aussenbolzen, an denen sich die Aussenkontur der Kurvenscheibe abwälzt.
Mit dieser Anordnung konnten die Laufgeräusche weiter vermindert werden, die einzuhaltenden Toleranzanforderungen sind dazu aber hoch.

Die Aufgabe der vorliegenden Erfindung besteht darin, die Nachteile des Standes der Technik zu beseitigen, bzw. zu vermindern. Es soll insbesondere eine kompakte Baugruppe mit einem Antrieb mit Getriebe für eine Lenkvorrichtung bereit gestellt werden, die vor allem ein geringes Laufgeräusch aufweist und mit wenigen und möglichst einfach herzustellenden Bauteilen realisiert werden kann, wobei die Toleranzanforderungen an die Komponenten der Vorrichtung reduziert oder einfacher beziehungsweise konstengünstiger mit den gängigen Herstellmethoden erfüllt werden können.

Die Aufgabe wird erfindungsgemäss durch die Fahrzeuglenkvorrichtung mit einem Antrieb mit einer Kurvenscheibengetriebeanordnung entsprechend dem Anspruch 1 oder 2 gelöst. Die abhängigen Patentansprüche 3 bis 15 beinhalten bevorzugte Ausführungsformen der Fahrzeuglenkvorrichtung.

Hierbei wird eine Fahrzeuglenkvorrichtung für ein Kraftfahrzeug vorgeschlagen, die einen Antrieb, der über ein Kurvenscheibengetriebe mit einer Abtriebswelle mit der Längsachse mit einem Lenkgetriebe verbunden ist enthält, wobei das Kurvenscheibengetriebe umfasst:
- mindestens eine um die Längsachse exzentrisch rotierbar angeordnete Kurvenscheibe mit einer wellenartigen Aussenkontur;
- die mindestens eine Kurvenscheibe eine Zentralöffnung im Zentrum aufweist;
- eine Rotorwelle koaxial drehbar um eine erste Welle mit der gemeinsamen Längsachse, in einer Trägeranordnung und an der ersten Welle gelagert angeordnet und dass diese mit dem Antrieb verbunden ist und mindestens einen Exzenter trägt mit einer Exzentrizität gegenüber der Längsachse, wobei jeder Exzenter in die Zentralöffnung einer zugeordneten Kurvenscheibe eingreift zur Erzeugung einer um die Längsachse rotierenden lateral taumelnden Bewegung der jeweiligen Kurvenscheibe;
- einen Träger angeordnet an einer zweiten Welle, die als Abtriebswelle ausgebildet ist, die drehbar gelagert in der Trägereinrichtung um die Längsachse rotierbar angeordnet ist, wobei an dem Träger in paralleler Richtung zur Längsachse auskragend eine die Kurvenscheibe umschliessende wellenförmige Innenkontur angeordnet ist, an der sich die wellenförmige Aussenkontur der mindestens einen Kurvenscheibe durch die exzentrische radial taumelnde Bewegung abwälzt,
- wobei entsprechend einer ersten Variante der Erfindung in axialer Richtung beabstandet zu mindestens eine Kurvenscheibe mindestens eine Übertragungsscheibe angeordnet ist, welche drehfest mit der ersten Welle verbunden ist, und dass zwischen einer Kurvenscheibe und einer Übertragungsscheibe eine Kreuzscheibe mit einer zentralen Öffnung angeordnet ist, durch welche die erste Welle hindurch führt, derart dass diese Kreuzscheibe radial zu dieser Welle beweglich ist, wobei in paralleler Richtung zur Längsachse an jeder der mindestens einen Kurvenscheibe zwei einander symmetrisch zu deren Zentrum gegenüberliegende Mitnehmerzapfen angeordnet sind, die in korrespondierende schlitzförmige Kreuzscheibenausnehmungen der zugehörigen Kreuzscheibe radial zu deren Zentrum beweglich eingreifen, und dass auf der von der Kurvenscheibe abgewandten Seite der Kreuzscheibe zwei weitere einander symmetrisch zu deren Zentrum gegenüberliegende Mitnehmerzapfen angeordnet sind, derart dass diese gegenüber deren Kreuzscheibenausnehmungen um 90° um deren Zentrum versetzt angeordnet sind, wobei diese in korrespondierende schlitzförmige Übertragungsscheibenausnehmungen der zugehörigen Übertragungsscheibe radial zu deren Zentrum beweglich eingreifen, derart dass in radialer Richtung zur Längsachse in jeder Wellenposition die mindestens eine Kurvenscheibe über die Übertragungsscheibe durch die erste Welle in Drehrichtung angetrieben werden,
- und in einer alternativen zweiten Variante der Erfindung vorgesehen, dass in axialer Richtung beabstandet zu mindestens einer Kurvenscheibe mindestens eine Übertragungsscheibe angeordnet ist, welche drehfest mit der ersten Welle verbunden ist, und dass zwischen einer Kurvenscheibe und einer Übertragungsscheibe eine Kreuzscheibe mit einer zentralen Öffnung angeordnet ist, durch welche die erste Welle hindurch führt, derart dass diese Kreuzscheibe radial zu dieser Welle beweglich ist, wobei in paralleler Richtung zur Längsachse an jeder der mindestens einen Kurvenscheibe zwei einander symmetrisch zu deren Zentrum gegenüberliegende schlitzförmige Mitnehmerausnehmungen angeordnet sind, in die korrespondierende Kreuzscheibenzapfen der zugehörigen Kreuzscheibe radial zu deren Zentrum beweglich eingreifen, und dass auf der von der Kurvenscheibe abgewandten Seite der Kreuzscheibe zwei weitere einander symmetrisch zu deren Zentrum gegenüberliegende schlitzförmige Mitnehmerausnehmungen angeordnet sind, derart dass diese gegenüber deren Kreuzscheibenzapfen um 90° um deren Zentrum versetzt angeordnet sind, wobei in diese korrespondierende schlitzförmige Übertragungsscheibenzapfen der zugehörigen Übertragungsscheibe radial zu deren Zentrum beweglich eingreifen, derart dass in radialer Richtung zur Längsachse in jeder Wellenposition die mindestens eine Kurvenscheibe über die Übertragungsscheibe durch die erste Welle in Drehrichtung angetrieben werden.

Neben den beiden Varianten sind auch weitere Varianten von der Erfindung umfasst, bei denen die Anordnung der Mitnehmerzapfen und schlitzförmigen Ausnehmungen in anderer Weise an der Kurvenscheibe, Kreuzscheibe und Übertragungsscheibe angeordnet sind, wobei stets ein Zapfen mit einer korrespondierenden Ausnehmung zusammenwirkt und die Winkellage in Umfangsrichtung auf den Scheiben gemessen um 90° zueinander versetzt ist. Die in der ersten Variante dargestellte Anordnung ist jedoch am einfachsten herstellbar und wird daher bevorzugt.

Die wellenförmige, die Kurvenscheibe kreisförmig umschliessende Innenkontur kann durch mehrere ringförmig angeordnete Aussenbolzen, welche parallel zur Längsachse und von dieser radial beabstandet am Träger angeordnet sind, ausgebildet werden. Die Aussenbolzen, die am Träger angeordnet sind, können dabei sowohl an diesem Träger voneinander beabstandet kranzförmig befestigt angeordnet sein, als auch von einer die Aussenbolzen umschliessenden umlaufenden, durchgehenden oder unterbrochenen, mit dem zweiten Träger verbundenen Innenkontur derart gehalten sein, dass die Kräfte, die beim Abwälzen der mindestens einen Kurvenscheibe auf die Aussenbolzen übertragen werden, über diese Innenkontur in den zweiten Träger eingeleitet werden. Alternativ kann auch eine entsprechende Innenverzahnung vorgesehen sein, die zum Abrollen der Aussenverzahnung oder wellenförmigen Aussenkontur der Kurvenscheibe geeignet ausgelegt ist. Bevorzugt ist als Antrieb ein elektrischer Antrieb. Die erste Welle und die zweite Welle können wahlweise gegeneinander als Antriebswelle oder Abtriebswelle vertauscht werden, wenn dies die Anwendung erfordert.

Dieses Kurvenscheibengetriebe kann auch als Untersetzungsgetriebe eingesetzte werden für den Einsatz in einer elektrisch unterstützten Lenkhilfe zur Einkopplung einer Servokraft in die Lenkvorrichtung abhängig vom Lenkradausschlag bzw. des erzeugten Steuersignals durch den Fahrerwunsch. Bei dieser Ausführungsform ist die erste Welle, an der der Träger angeordnet ist, an der Trägeranordnung fixiert und bildet eine Haltewelle, derart dass sie nicht drehen kann.

Bei der Ausbildung der Antriebsanordnung als Drehzahlüberlagerungsvorrichtung in einer Fahrzeuglenkvorrichtung wird die erste Welle, die mit den Übertragungsscheiben verbunden ist, drehbar um die Längsachse mit Lagern gelagert angeordnet. Entsprechend sind die Übertragungsscheiben dieser Ausführungsform um die Längsachse rotierbar. Diese erste Welle ist als Antriebswelle ausgebildet, welche mit dem Steuerrad direkt oder indirekt zur Übertragung von Drehbewegungen verbunden ist. Bei Drehung des Lenkrades um einen bestimmten Winkel wird diese Antriebswelle am Kurvenscheibengetriebe entsprechend verdreht und die Abtriebswelle wird um einen gewünschten Winkel, dessen Grösse abhängig von der überlagerten Drehzahl des Elektromotors ist, verdreht. Entsprechend erfolgt eine Drehzahl- bzw. Drehwinkelüberlagerung zwischen der Eingangswelle und dem Rotor einerseits und der Abtriebswelle andererseits. Das hier vorgestellte Kurvenscheibengetriebe eignet sich besonders gut für den Einsatz in einer Drehzahlüberlagerungsvorrichtung einer Fahrzeuglenkvorrichtung, da dort der Effekt der Geräuschminderung besonders wichtig ist und deutlich in Erscheinung tritt.

Durch das Steuerrad wird die erste Welle, die eine Antriebswelle bzw. eine Eingangswelle bildet, angetrieben auf der eine erste Übertragungsscheibe mit Ausnehmungen, wie Langlöchern, angeordnet ist, in die eine erste Kreuzscheibe mit einem ersten Kreuzzapfenpaar, das in eine Richtung ausgerichtet ist, entsprechend eingreift. Dadurch kann eine Drehung übertragen werden und es wird eine exzentrische Bewegung der ersten Kreuzscheibe zugelassen, da die Mitnehmerzapfen in den Langlöchern in der ersten Übertragungsscheibe gleiten können. Die Kreuzscheibe besitzt senkrecht ausgerichtet zu den Mitnehmerzapfen gegenüberliegend jeweils ein Langloch, in das entsprechende Mitnehmerzapfen von der ersten Kurvenscheibe, vorzugsweise als Zykloidenscheibe ausgebildet, eingreifen können. Die Kurvenscheibe selbst ist auf einem ersten Exzenter gelagert und trägt an ihrem Aussenumfang eine entsprechende Verzahnung, vorzugsweise eine Zykloidenverzahnung. Über diese Verzahnung wird das Drehmoment an die wellenförmige Innenkontur, beispielsweise ausgebildet mit den entsprechende Aussenbolzen am Träger, die fest mit der Abtriebswelle verbunden ist übertragen, so dass die Abtriebswelle eine entsprechende Drehung erfährt. Alternativ zu der bevorzugten Zykloidenverzahnung kann auch eine andere Verzahnungsart wie sie im Stand der Technik bekannt ist verwendet werden. Beispielhaft können anstatt der zuvor beschriebenen Innenkontur, gebildet beispielsweise durch umlaufende Aussenbolzen und der kugel- oder kreisförmigen zykloidischen Aussenkontur der mindestens einen Zykloidenscheibe, diese beiden Konturen auch als Verzahnung ausgebildet sein. Die Zykloidenform wird allerdings bevorzugt.

Wird der Rotor des Elektromotors angetrieben, so wird entsprechend auch die erste Kurvenscheibe in Drehung versetzt. Auf diese Weise wird zusätzlich zur Drehung der Eingangswelle eine Drehung in das System eingebracht und entsprechend erfolgt eine Überlagerung der Drehzahl.

Zur besseren Lastverteilung besitzt dieses System in dem bevorzugten Beispiel zwei Kurvenscheiben. In der konstruktiven Ausbildung ist deshalb eine zweite Übertragungsscheibe vorgesehen, die mit der ersten Übertragungsscheibe, beispielsweise über Zapfen, verbunden ist und in völlig gleichartiger Weise Langlochausnehmungen trägt, die in der gleichen Richtung ausgerichtet sein müssen, wie die Langlöcher in der ersten Übertragungsscheibe. Entsprechend ist eine zweite Kreuzscheibe als Kreuzmitnehmer vorgesehen, der die Drehung der zweiten Kurvenscheibe überträgt. Durch diese Anordnung wird eine Kreuzmitnehmerkupplung gebildet, über welche die mindestens eine Kurvenscheibe von der Antriebswelle getrieben wird. Durch diese Art der gleitenden Kraftübertragung können Laufspiele ausgeglichen werden und die Übertragung der Drehung der Kurvenscheibe kann sehr präzise erfolgen auch bei abweichenden radialen Toleranzen der drehenden Teile, wodurch es möglich wird die Bildung von unerwünschten Laufgeräuschen zusätzlich und wesentlich zu verringern. Ausserdem werden dadurch geringere Fertigungstoleranzen notwendig, wodurch die Vorrichtung einfacher und wirtschaftlicher herstellbar ist. Weiter gestattet diese Art der Drehübertragung eine gezielte Abänderung der Aussenkontur der Kurvenscheibe von der theoretischen Idealkontur in der Weise, dass die Verzahnungseingriffsverhältnisse nach Vorgaben gezielt verändert werden können. Ein Beispiel für derartige Veränderungen der Verzahnungsauslegung ist der EP0770192B1 zu entnehmen.

Es ist völlig naheliegend, die Kreuzmitnehmerkupplung auch durch eine Vertauschung der Zapfen mit den Nutelementen zu bewirken. So kann die Kreuzscheibe nur Nuten aufweisen und die entsprechende Zykloidenscheibe und Übertragungsscheibe Zapfen aufweisen oder Alternativ kann der Kreuzscheibe auch nur Zapfen aufweisen und die entsprechenden Nuten sind in den anderen Scheiben ausgebildet.

Kurvenscheibengetriebe können mit einer oder mehreren Scheiben ausgebildet werden. Die Scheiben sind, abgesehen von der Ausbildung von Nebenformelementen für andere Funktionen, wie Schmierung usw., hierbei vorzugsweise identisch. Sie weisen die gleichen wellenartigen Aussenkonturen auf und die gleiche Anzahl, Anordnung und Dimension der Bohrungen. Auch die zentrale Bohrung zur exzentrischen Führung im Zentrum der Scheibe ist identisch im Durchmesser und koaxial zur Scheibe angeordnet. Für jede Scheibe wird ein eigener Exzenter am Rotor des Antriebes vorgesehen. Somit wird jede Scheibe von einem zugeordneten Exzenter um die gleiche laterale Exzentrizität bewegt aber mit unterschiedlicher Phasenlage bzw. Winkellage in Drehrichtung. Bei der Verwendung von zwei Kurvenscheiben werden zwei Exzenter auf dem Rotor um einen Winkel von etwa 180° versetzt angeordnet verwendet. Bei der Verwendung von drei Kurvenscheiben werden drei Exzenter auf dem Rotor um einen Winkel von etwa je 120° versetzt angeordnet verwendet.
Der Winkel wird häufig nicht genau auf die 180°, 120° bzw. den Wert von 360° geteilt durch die Anzahl der Kurvenscheiben gelegt, damit zusätzliche Vorspannungen und/oder Entspannungen innerhalb des Getriebes erreicht werden. Werte von bis zu +/- 3° stellen übliche Werte für die Abweichung vom jeweiligen Nennwert dar und werden entsprechend mit "etwa" bezeichnet.
Der Aufbau mit zwei Kurvenscheiben und zwei Exzenter ist besonders günstig zu realisieren und bevorzugt, da der Aufbau einfach ist und verbunden mit guten gleichförmigen Laufeigenschaften bei geringen Laufgeräuschen.

Mit Vorteil werden derartige Kurvenscheiben durch Feinschneiden hergestellt. Dabei kann je nach Anforderung auf eine Nachbearbeitung der Bohrungen und der äusseren Kurvenkontur teilweise sogar verzichtet werden.

Es ist jedoch auch denkbar und möglich, die Kurvenscheiben aus lammellenartig zu einem Kurvenscheibenpaket zusammengefassten mehreren einzelnen gleichartigen Kurvenscheiben auf ein und demselben Exzenter anzuordnen. Jedes derartige Kurvenscheibenpaket wirkt dann genau wie eine einzelne Kurvenscheibe. Dieser Fall wird mit Vorzug angewendet zur Vereinfachung der Herstellung, wie sie beispielsweise durch die Begrenzung der Blechdicke im Fall der Feinschneidoperation gegeben ist. Weiter können durch entsprechende Verspannungen der einzelnen Lamellen Geräusche reduziert werden und die Kontaktsituation zu dem mit den Kurvenscheiben in Eingriff stehenden Getriebeelementen verbessert werden und Spiele reduziert werden.

Das Kurvenscheibengetriebe mit der Kreuzmitnehmerkupplung, gemäss der vorliegenden Erfindung, ermöglicht eine koaxiale Anordnung und die einfache Integration mit einem Elektromotor, vorzugsweise einem elektronisch kommutierten Elektromotor, was zu einer sehr wirtschaftlichen und kompakten Ausbildung der gesamten Antriebseinheit führt.

Beim bevorzugten Beispiel der Innenkontur gebildet durch Aussenbolzen, an denen sich die wellenförmige Aussenkontur der Kurvenscheiben abwälzt, sind diese bevorzugt kreisrund ausgebildet und sind weiter bevorzugt zur Verringerung der Reibung um ihre eigene Achse drehbar gelagert, beispielsweise durch ein Gleit- oder Nadellager.

Es ist aber denkbar und möglich, die Aussenbolzen durch eine äussere Umfangskontur zu ersetzen, die die Oberflächenbereiche der Aussenbolzen, an denen die wellenförmige Aussenkontur der Kurvenscheiben im Falle der Ausführungsform mit den Aussenbolzen mit den Aussenbolzen in Kontakt steht, nachbildet. Die übrigen Oberflächenbereiche sollten dabei derart freigestellt ausgebildet sein, dass sie während des gesamten Umlaufs der Kurvenscheiben nicht in Kontakt mit der wellenförmigen Aussenkontur der Kurvenscheiben kommen. Diese alternative Ausführungsform wird mit Vorteil zu Erhöhung der Steifigkeiten angewendet, insbesondere bei hohen zu übertragenden Drehmomenten.

In einer vorteilhaften Weiterbildung der Erfindung wird in das Überlagerungsgetriebe eine Sicherheitskupplung bzw. eine Schaltung integriert, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen.

Entsprechend der vorgestellten Erfindung ist sowohl die Anordnung der Überlagerungsvorrichtung und / oder der Lenkhilfe zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass die Einrichtung zwischen Lenkgetriebe und Spurstange oder im Lenkgetriebe angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben. Je nach Einbauerfordernis kann die erste Welle und die zweite Welle wahlweise gegeneinander als Antriebswelle oder Abtriebswelle vertauscht betrieben werden.

Die Erfindung wird nun nachfolgend beispielsweise und mit schematischen Figuren für bevorzugte Ausführungsformen näher erläutert. Es zeigen:
- Fig. 1: Schematischer Aufbau eines Lenksystems mit Hilfskraftunterstützung;
- Fig. 2: dreidimensionale Darstellung eines Überlagerungsgetriebes mit inner- halb des Gehäuse, koaxial angeordnetem Elektromotorantrieb entspre- chend der Ausführungsform, wie sie in der Figur 3 gezeigt ist;
- Fig. 3: Längsschnitt durch eine erste Ausführungsform entsprechend der Er- findung in dreidimensionaler Darstellung für eine Drehzahlüberlage- rungseinrichtung mit einem Kurvenscheibengetriebe mit zwei Kurven- scheiben, kombiniert mit einem integriertem Elektromotor, alles koaxial angeordnet;
- Fig. 4: ein bevorzugtes Ausführungsbeispiel des Kurvenscheibengetriebes mit zwei Kurvenscheiben hintereinander angeordnet und mit den zugehöri- gen Kreuzscheiben, gemäss der Erfindung in dreidimensionaler und auseinandergezogenen Darstellung;
- Fig. 5: eine weitere Darstellung entsprechend der Figur 4, leicht gedreht mit seitlicher Ansicht;
- Fig. 6: eine weitere Darstellung entsprechend den Figuren 4 und 5, mit etwas weiter gedrehter Ansicht;
- Fig. 7: in dreidimensionaler Darstellung eine erste Kreuzscheibe im Detail mit Mitnehmerzapfen und Kreuzscheibenausnehmungen;
- Fig. 8: in dreidimensionaler Darstellung und im Detail eine Kurvenscheibe mit wellenartiger Aussenkontur, die zykloidenförmig ausgebildet ist und Mitnehmerzapfen aufweist;
- Fig. 9: eine alternative Ausführungsform für einen Träger mit einer Innenkontur gebildet mit der Anordnung von Aussenbolzen, eingelegt in ein ringför- miges Trägerelement;
- Fig. 10: eine alternative Ausführungsform für einen Träger mit einer Innenkontur gebildet mit einer ringförmigen Verzahnung als Zahnkranz, an einem ringförmigen Trägerelement;
- Fig. 11: ein weiteres Ausführungsbeispiel des Kurvenscheibengetriebes mit zwei Kurvenscheiben hintereinander angeordnet und mit den zugehöri- gen Kreuzscheiben, gemäss der Erfindung in dreidimensionaler und auseinandergezogenen Darstellung, ähnlich der Darstellung in der Fi- gur 4, mit direkt an der Antriebswelle fest fixierten Übertragungsschei- ben;
- Fig. 12: in dreidimensionaler Darstellung und im Detail eine Kurvenscheibe mit wellenartiger Aussenkontur, die mit einer Verzahnung als Zahnkranz ausgebildet ist und Mitnehmerzapfen aufweist.

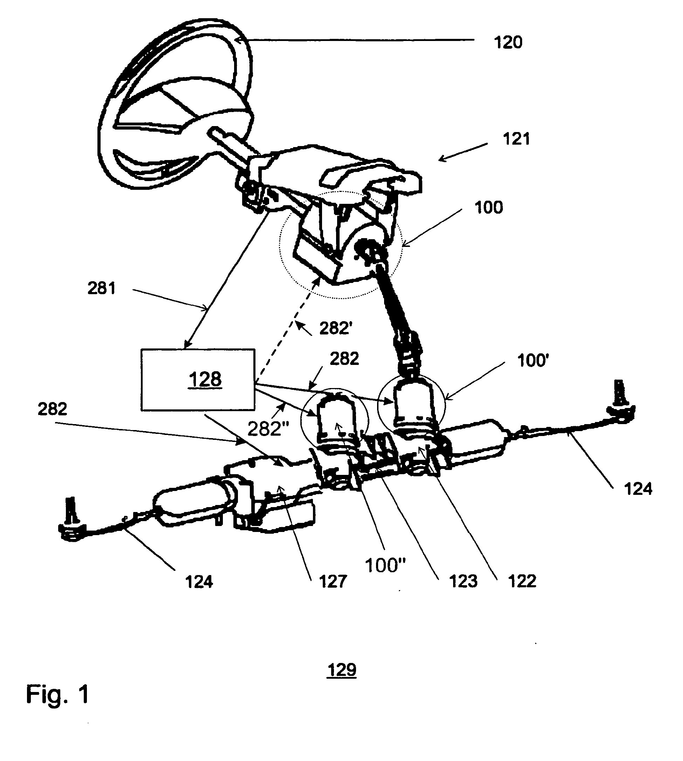

Der in Figur 1 gezeigte schematische Aufbau einer Lenkvorrichtung 129 als Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Drehzahlüberlagerung dient die erfindungsgemäße Überlagerungseinrichtung 100, 100' oder 127. Dabei kann die Überlagerungseinrichtung 100' auch direkt in das Lenkgetriebe 122 integriert sein. Erfindungsgemäss kann die Einrichtung etwas modifiziert, auch als Hilfsantrieb 100" für eine elektrisch unterstützte Lenkhilfe ausgebildet sein, die ebenfalls im Bereich des Lenkgetriebes oder der Lenksäule angeordnet werden kann zur Einkopplung einer Hilfssteuerkraft.

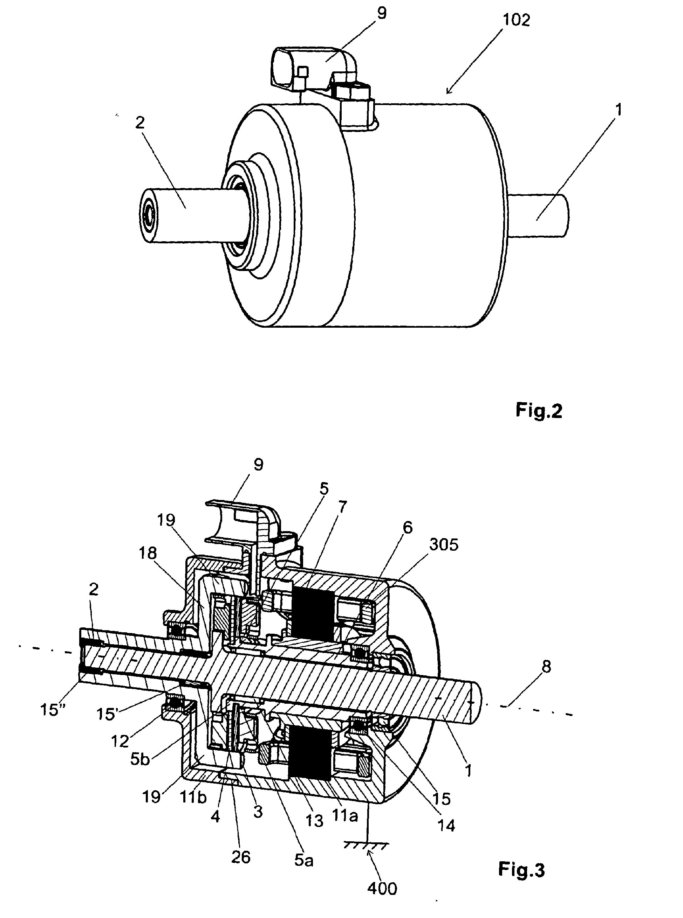

In der bevorzugten Ausführungsform befindet sich die Überlagerungseinrichtung zwischen Steuerrad 120 und Lenkgetriebe 122, beispielsweise an der mit 100 gekennzeichneten Stelle. In den Figuren 2 und 3 ist diese Ausführungsform des Überlagerungsgetriebes 100 näher gezeigt.

In einer weiteren Ausführungsform wird die Überlagerungseinrichtung zwischen Lenkgetriebe 122 und Spurstangen 124 oder im Lenkgetriebe angeordnet. Die Überlagerungseinrichtung 127 enthält dann ein Umwandlungsgetriebe zur Übersetzung der Drehbewegung in eine Translationsbewegung, beispielsweise einen Kugelgewindetrieb oder eine Kugelgewindemutter.

In allen Ausführungsformen wird - im Normalfall - der Fahrerwunsch durch das Steuerrad 120 über eine hier nicht gezeigte Sensorik als Signal 281 in ein Steuergerät 128 eingespeist. Im Steuergerät 128 wird daraus, gegebenenfalls unter Zuhilfenahme eines Sensorsignals des Hilfsantriebes des Lenksystems (Signalleitung hier nicht dargestellt) und/oder der Drehzahlüberlagerungseinheit und weiterer den Fahrzeugzustand beschreibender Signale, die entsprechende Steuerspannung 282, 282', 282" für den Elektromotor bestimmt und an den Elektromotor, in der Überlagerungseinrichtung 100 bzw. 100' und / oder den Hilfsantrieb 100" für die elektrisch unterstützte Lenkhilfe ausgegeben.

Die Erfindung bezieht sich auf einen Hilfsantrieb 100" für die elektrisch unterstützte Lenkhilfe und vorzugsweise auf eine Überlagerungseinrichtung 100, 100' in der Anordnung in einem Lenksystem 129 für ein Kraftfahrzeug. Die erfindungsgemässe Überlagerungseinrichtung kann dabei in einem Lenksystem mit oder ohne Hilfskraftunterstützung eingesetzt sein. Neben dem Einsatz einer erfindungsgemässen Überlagerungseinrichtung ist es auch möglich eine eventuell vorhandene Hilfskraftunterstützung des Lenksystems hydraulisch, pneumatisch oder elektrisch, beispielsweise auch nach dem vorliegenden erfindungsgemässen Antriebskonzept, zu realisieren.

Die erfindungsgemässe Fahrzeuglenkvorrichtung, entsprechend den Ausführungsbeispielen, enthält einen vorzugsweise elektrischen Antrieb 102, der über ein Kurvenscheibengetriebe 3, 4, 5, 18, 19 mit einer zweiten Welle, der Abtriebswelle 2 mit der Längsachse 8, mit einem Lenkgetriebe 122 verbunden ist.

Diese Antriebsvorrichtung mit dem Kurvenscheibengetriebe kann sowohl für eine elektrisch unterstützte Lenkhilfe, wie auch für eine Drehzahlüberlagerungsvorrichtung mit Vorteil eingesetzt werden. Als Drehzahlüberlagerungseinrichtung ist die Anordnung besonders geeignet. Die Details der Erfindung werden nun Anhand der Figuren 2 bis 12 mit verschiedenen Ausführungsbeispielen im weiteren erläutert.

Die Überlagerungseinrichtung 100 weist eine Antriebswelle 1, die direkt oder indirekt vom Steuerrad 120 angetrieben wird, eine Abtriebswelle 2, die direkt oder indirekt die Spurstangen antreibt, eine Trägeranordnung 11, einen Hilfsantrieb, bevorzugt ein Elektromotor 6, 7, mit einem Rotor 6 und einem Stator 7 und ein Kurvenscheibengetriebe 3, 4, 5, 18, 19 auf, welches zwischen dem Elektromotor und der Abtriebswelle angeordnet ist.
Die Drehzahlüberlagerungseinrichtung, wie in den Figuren 2 und 3 gezeigt umfasst folgende Komponenten:
- eine Antriebseinrichtung, hier die erste Welle als Antriebswelle 1, mit einer Drehachse 8;
- eine Abtriebseinrichtung, hier die zweite Welle als Abtriebswelle 2, mit einer Drehachse 8;
- einen Hilfsantrieb 102 der einen Rotor 6, mit einer Drehachse 8, antreibt;
- einer karosseriefesten Trägeranordnung, vorteilhaft als Gehäuse 11 ausgebildet, wie beispielsweise aus den mindestens zwei Gehäuseteilen 11a und 11b bestehend, die die Wellen 1, 2 und den Rotor 6 des Hilfsantriebs in den Lagern 12, 15, 15', 15" bzw. 13, 14 lagern, wobei diese Gehäuseteile vorzugsweise mit einem Gewinde 26 verschraubbar ausgebildet sind;
- mindestens eine um die Längsachse 8 exzentrisch rotierbar angeordnete Kurvenscheibe 3, 4 mit einer wellenartigen Aussenkontur 33, 34, wobei die mindestens eine Kurvenscheibe 3, 4 eine kreisrunde, koaxial angeordnete Zentralöffnung 30a, 30b im Zentrum aufweist;
- einen Träger 18 angeordnet an einer zweiten Welle 2, die als Abtriebswelle 2 ausgebildet ist und dessen Achse in der Längsachse 8 liegt und um diese rotierbar ist, wobei an dem Träger 18 in paralleler Richtung zur Längsachse 8 radial beabstandet auf einem konzentrisch zur Längsachse liegenden Teilkreis Aussenbolzen 19 angeordnet sind, an denen sich die wellenförmige Aussenkontur 33, 34 der mindestens einen Kurvenscheibe 3, 4 durch die exzentrische radial taumelnde Bewegung abwälzt;
- wobei der Rotor 6 koaxial drehbar um die Antriebswelle 1 und die gemeinsame Längsachse 8 gelagert angeordnet und mit dem Antrieb 102 wirkverbunden ist und der Rotor 6 für jede Kurvenscheibe einen dieser zugeordneten Exzenter 5a, 5b mit einer Exzentrizität 22 gegenüber der Längsachse 8 trägt und der Exzenter in die Zentralöffnung 30a, 30b der zugeordneten Kurvenscheibe 3, 4 eingreift, um eine um die Längsachse 8 rotierenden lateral taumelnden Bewegung der zugeordneten mindestens einen Kurvenscheibe 3, 4 zu bewirken, wobei die Antriebs- und die Abtriebswelle 1, 2 vorzugsweise in einer einzigen Längsachse mit einem Drehzentrum 8 angeordnet sind;
- wobei die mindestens eine Kurvenscheibe 3, 4 zwischen zwei Übertragungsscheiben 40, 50 angeordnet sind, welche drehfest mit der ersten Welle 1 verbunden sind, und dass mindestens zwischen einer Kurvenscheibe 3, 4 und einer Übertragungsscheibe 40, 50 eine Kreuzscheibe 45, 55 mit einer zentralen Öffnung 49, 59 angeordnet ist, durch welche die erste Welle 1 hindurch führt, derart dass diese Kreuzscheibe 45, 55 radial zu dieser Welle beweglich ist, wobei in paralleler Richtung zur Längsachse 8 an jeder der mindestens einen Kurvenscheibe 3, 4 zwei einander symmetrisch zu deren Zentrum gegenüberliegende Mitnehmerzapfen 48, 58 angeordnet sind, die in korrespondierende schlitzförmige Kreuzscheibenausnehmungen 46, 56 der zugehörigen Kreuzscheibe 45, 55 radial zu deren Zentrum beweglich eingreifen, und dass auf der gegenüberliegenden Seite der Kreuzscheibe 45, 46 zwei weitere einander symmetrisch zu deren Zentrum gegenüberliegende Mitnehmerzapfen 47, 57 angeordnet sind, derart dass diese gegenüber deren Kreuzscheibenausnehmungen 46, 56 um 90° um deren Zentrum versetzt angeordnet sind, wobei diese in korrespondierende schlitzförmige Übertragungsscheibenausnehmungen 46, 56 der zugehörigen Übertragungsscheibe 41, 51 radial zu deren Zentrum beweglich eingreifen, derart dass in radialer Richtung zur Längsachse in jeder Wellenposition die mindestens eine Kurvenscheibe 3, 4 spielausgleichend über die Übertragungsscheiben 40, 50 durch die erste Welle 1 angetrieben werden.

Die mindestens eine Kurvenscheibe 3, 4 wird entsprechend dieser Anordnung von der ersten Welle, der Antriebswelle 1, über eine an dieser Welle angeordneten Übertragungsscheibe 40, 50 mit dazwischen angeordneter Kreuzscheibe 45, 55 entsprechend dem Steuerausschlag verdreht bzw. angetrieben. Die kreuzweise an den Scheiben angeordneten Mitnehmerzapfen welche in zugehörige Ausnehmungen, radial gleitend, eingreifen ermöglichen die Kupplung der Scheiben und somit auch die Übertragung der Drehung auf die exzentrisch taumelnde Kurvenscheibe. Diese Anordnung bildet somit eine Kreuzmitnehmerkupplung, wie dies in den Figuren 3 bis 8 und 11 gezeigt ist. Die Kurvenscheibe 3, 4 wird ausserdem von einem Rotor 6 des Motorantriebes 6, 7, welcher Exzenter 5a, 5b trägt, angetrieben, derart dass die Kurvenscheibe 3, 4 um die Längsachse 8 in radialer Richtung um die Exzentrizität 22 taumelt und sich die Aussenkontur 33, 34 der Kurvenscheibe an der Innenkontur 182, 184 abwälzt und dadurch eine entsprechend untersetzte Drehzahl zusätzlich überlagert wird und an der zweiten Welle, der Abtriebswelle 2, ausgegeben wird. Dadurch wird eine gewünschte Drehwinkelverstellung zwischen Antriebswelle 1 und Abtriebswelle 2 erzielt. Die Kreuzmitnehmerkupplung, welche den exzentrischen Lauf der Kurvenscheibe ausgleicht, ermöglicht die dazu erforderlichen engen Toleranzen genau einzuhalten, wodurch eine hohe Laufpräzision mit engem Spiel eingehalten werden kann, bei geringen Laufgeräuschen.

Die erste Welle 1 und die zweite Welle 2 sind wahlweise gegeneinander als Antriebswelle oder Abtriebswelle vertauschbar, je nach Anforderung der Anwendung, ohne dass die Funktion der Anordnung beeinträchtigt wird.

Das Kurvenscheibengetriebe kann mit einer einzelnen Kurvenscheibe 3, 4 oder aber auch mit mehreren Kurvenscheiben 3, 4 ausgebildet werden. Die Ausführung mit zwei Kurvenscheiben, wie in den Figuren 3 bis 6 und 11 dargestellt, wird bevorzugt, da hierbei eine genügend starke Verminderung der Laufgeräusche auch bei noch einfacher Realisierung erreicht werden kann. Die zwei oder mehrere Kurvenscheiben weisen dieselbe wellenartige Aussenkontur mit gleichem Durchmesser auf, sind aber gegeneinander versetzt angeordnet und wälzen sich auf derselben Innenkontur ab.

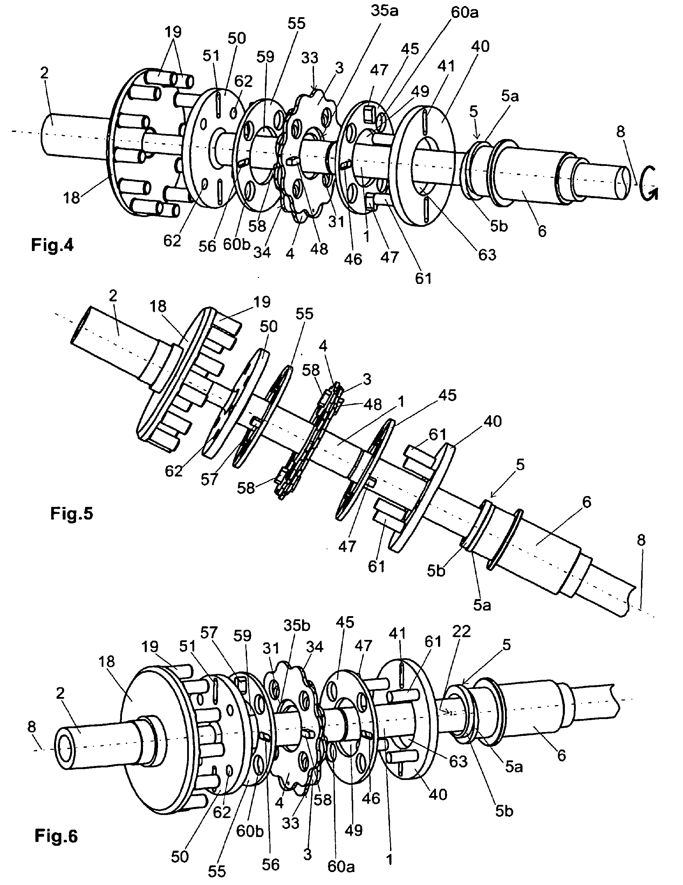

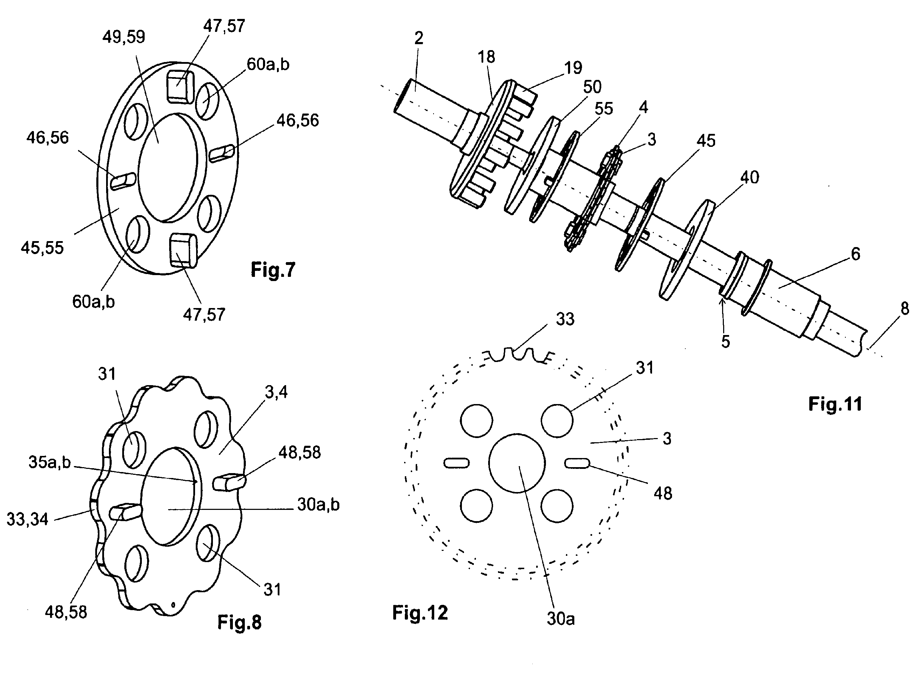

Eine erste Kurvenscheibe 3, 4 ist in der Figur 8 in leicht schräger Sicht im Detail dargestellt. Die kreisrunde Kurvenscheibe 3, 4 weist eine wellenartige Aussenkontur 33, 34 auf, an deren Fläche sich die Aussenbolzen 19 durch die exzentrische und rotierende Bewegung abgleitet. Die wellenartige Aussenkontur 33 ist als im Kreis geschlossener Kurvenzug ausgebildet mit sich periodisch wiederholenden Erhebungen und Senken welche vorzugsweise einen stetigen, noch besser einen stetig differenzierbaren, Verlauf aufweisen. Entsprechend ist der Kurvenzug umfänglich geschlossen ausgebildet. Die gewählte Anzahl der Wellenperioden liegt vorzugsweise im Bereich von 6 bis 64 Perioden, wobei eine geradzahlige Anzahl zu bevorzugen ist. Um einen gleichförmigen Bewegungsablauf zu erreichen, kann die Aussenkontur mindestens teilweise zykloidenförmig ausgebildet werden. Im Zentrum der Kurvenscheibe 3, 4 ist koaxial zum Scheibenzentrum eine Zentralöffnung 30a, 30b ausgebildet, in welcher ein zugehöriger Exzenter 5a, 5b der auf dem Rotor 6 angeordnet ist, eingreift, um die laterale Taumelbewegung zu erzeugen durch abgleiten oder rollen an der Gleitfläche 35a, 35b der Zentralöffnung 30a, 30b, wie dies in den Figuren 4 bis 6 dargestellt ist.
Wie zuvor beschrieben wird durch das Steuerrad 120 eine Eingangswelle 1 angetrieben, auf der eine erste mitdrehende Übertragungsscheibe 50 angeordnet ist, in die eine erste Kreuzscheibe 55 mit einem ersten Kreuzzapfenpaar 51, 56, das in eine Richtung ausgerichtet ist, eingreift. An den Scheiben sind dazu jeweils Mitnehmerzapfen 47, 48, 57, 58 und / oder Ausnehmungen 41, 46, 51, 56 angeordnet. Ein Mitnehmerzapfen auf einer der Scheiben greift jeweils in eine benachbarte Ausnehmung einer anderen Scheibe ein, wodurch diese benachbarten Scheiben gekoppelt werden zur Drehung. Die Mitnehmerzapfen und die Ausnehmungen sind radial beabstandet vom Scheibenzentrum bzw. der Längsachse 8 an den Scheiben angeordnet. Je zwei Mitnehmerzapfen und / oder Ausnehmungen sind einander symmetrisch zum Scheibenzentrum gegenüber liegend angeordnet. An der Kreuzscheibe 45, 55 sind zwei derartige Paare um 90° gegeneinander versetzt, kreuzförmig, angeordnet. Die Ausnehmungen sind in radialer Richtung geschlitzt ausgebildet, derart dass die zugeordneten Mitnehmerzapfen darin in radialer Richtung, zumindest um den Weg der Exzentrizität 22, gleiten können. Ausnehmungen können in den Scheiben durchgehend als Loch, als aufgesetzte Leisten oder auch als Vertiefung ausgebildet sein. Mitnehmerzapfen und zugehörige Ausnehmungen können an der jeweils zugehörigen Übertragungsscheibe 40, 50, der Kreuzscheibe 45, 55 und der Kurvenscheibe 3, 4 gegeneinander getauscht angeordnet sein solange das zugehörige gegenüberliegende Paar einen Eingriff bildet. Die Kreuzscheibe 45, 55 weist im Zentrum eine Zentralöffnung 49, 59 auf durch welche die erste Welle 1 und allenfalls der Rotor 6 mit Exzenter 5 hindurchgreift und welche gross genug ist die exzentrische Bewegung zu zu lassen. Eine bevorzugte Ausbildung einer Kreuzscheibe 45, 45 mit daran angeordneten Mitnehmerzapfen 47, 57 und Ausnehmungen 46, 56 ist in der Figur 7 dargestellt.
Die Mitnehmerzapfen 47, 48, 57, 58 können einen runden Querschnitt aufweisen deren Oberfläche als Gleitlagerteil ausgebildet sind, so dass diese in den länglichen Ausnehmungen radial gleiten können. Sie können aber auf dem runden Querschnitt auch rollende Lager aufnehmen wenn die Reibung noch weiter verringert werden soll. Es ist allerdings von Vorteil wenn die Mitnehmerzapfen 47, 48, 57, 58 einen länglichen Querschnitt aufweisen, vorzugsweise einen etwa rechtekkigen, deren Oberfläche als Gleitlagerteil ausgebildet ist, wodurch eine einfache Bauweise bei guter Gleitführung erzielt wird. Unter "etwa" rechteckig ist hier eine rechteckige Grundform mit scharfkantigen oder bevorzugt abgerundeten Ecken. Dabei kann der Durchmesser der Abrundung bis zur Grösse der Breite des Zapfens reichen, so dass der Zapfen an seinen Längsseiten ein- oder beidseitig durch eine halbrunde Form abgeschlossen ist. Die Mitnehmerzapfen weisen dann folglich eine im wesentlichen rechteckige Form auf.

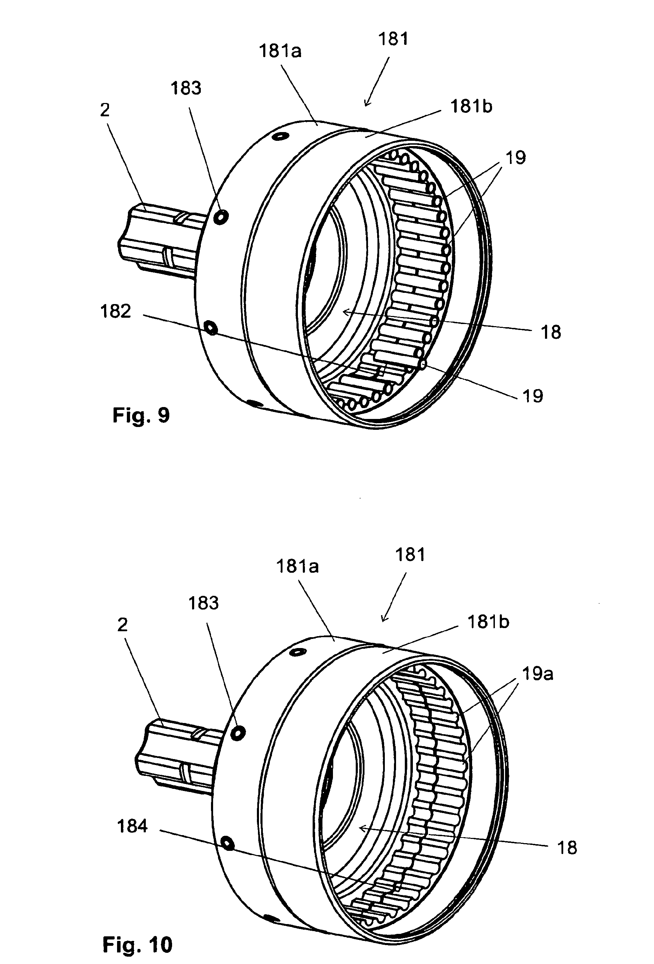

Mit dieser Kreuzmitnehmerkupplung kann eine Drehung übertragen werden und es wird eine exzentrische Bewegung der ersten Kreuzscheibe 55 zugelassen, da die Mitnehmerzapfen in den Langlöchern 46 in der ersten Übertragungsscheibe 40 gleiten können. Die Kreuzscheibe 45 besitzt senkrecht ausgerichtet zu den Mitnehmerzapfen gegenüberliegend jeweils ein Langloch, in das entsprechende Mitnehmerzapfen von der ersten Kurvenscheibe 1, eingreifen können. Die Kurvenscheibe 1 selbst ist auf einem ersten Exzenter 5a gelagert und trägt an ihrem Aussenumfang eine entsprechende Kurvenscheibenverzahnung. Über diese Kurvenscheibenverzahnung wird das Drehmoment in entsprechende Aussenbolzen 19, die fest mit der Abtriebswelle 2 verbunden sind übertragen, so dass die Abtriebswelle 2 eine entsprechende Drehung erfährt. Bevorzugt wird eine zykloidenförmige wellenartige Verzahnung gemäss der Darstellung in den Figuren 4 bis 6 und 8. Alternativ zu dieser Zykloidenverzahnung kann auch eine andere Verzahnungsart wie sie im Stand der Technik bekannt ist verwendet werden. Beispielhaft können anstatt der Aussenbolzen 19, die eine umlaufende Innenkontur 182 bilden, und der kugelförmigen zykloidischen Aussenkontur der ersten Zykloidenscheibe auch eine Verzahnung vorliegen, wie sie bei üblichen Zahnrädern Verwendung finden, wie dies im Detail als Beispiel in der Figur 12 dargestellt ist, welche eine Kurvenscheibe mit Aussenzahnkranz zeigt. Die Innenkontur ist in diesem Fall als Innenzahnkranz 19a ausgebildet wie dies in der Figur 10 beispielsweise dargestellt ist. Wird nun der Rotor 6 des Elektromotors 6, 7 angetrieben, so wird entsprechend auch die erste Kurvenscheibe 3 in Drehung versetzt. Auf diese Weise wird zusätzlich zur Drehung der Eingangswelle 1 eine Drehung in das System eingebracht und entsprechend erfolgt eine Überlagerung der Drehzahl auf die Abtriebswelle 2.

Zur besseren Lastverteilung besitzt dieses bevorzugte System genau zwei Kurvenscheiben auf, wie dies im Beispiel in den Figuren 2 bis 6 gezeigt ist. In dieser konstruktiven Ausbildung ist deshalb eine zweite Übertragungsscheibe 40 vorgesehen, die über Verbindungsmittel 61, wie Verbindungszapfen 61 mit der ersten Übertragungsscheibe 50 verbunden ist, beispielsweise mit Ausnehmungen 62 an der ersten Übertragungsscheibe 50 verzapft, und in völlig gleichartiger Weise Langlochausnehmungen 41 trägt, die in der gleichen Richtung ausgerichtet sein müssen, wie die Langlochausnehmungen 51 in der ersten Übertragungsscheibe 50. Entsprechend ist eine zweite Kreuzscheibe 45 als weiterer Kreuzmitnehmer vorgesehen, der die Drehung der zweiten Kurvenscheibe 3 bewirkt. Die Verbindung der beiden Übertragungsscheiben 40, 50 erfolgt in der Ausbildung gemäss den Figuren 4 bis 6 über Verbindungsmittel 61, welche in paralleler Richtung zur Längsachse 8 über Durchgangsöffnungen 31, 60 der mindestens einen Kurvenscheibe 3, 4 und der mindestens einen Kreuzscheibe 45, 55 hindurch geführt sind, wobei die Verbindungsmittel 61 vorzugsweise mindestens zwei in Bezug zur Längsachse 8 einander gegenüberliegende Verbindungszapfen 61 sind und die Durchgangsöffnungen 31, 60 gross genug sind zur Zulassung der Auslenkung der Exzentrizität 22. Hierbei weist die zweite Übertragungsscheibe 40 eine Zentralöffnung 63 auf durch welche die Antriebswelle 1 und der Rotor 6 frei drehbar hindurchgreift, derart dass diese Übertragungsscheibe nur von den Verbindungsmitteln 61 getragen wird.
Es ist auch möglich auf die vorerwähnten Verbindungsmittel 61, welche durch die Kurvenscheiben 3, 4 und die Kreuzscheiben 45, 55 hindurchgreifen zu verzichten indem die zweite Übertragungsscheibe 40 direkt an der Antriebswelle 1, gleichlaufend mit der ersten Übertragungsscheibe 50 fixiert ist, wobei diese ausgerichtet und eingerastet mit den zugeordneten Zapfen / Ausnehmungs - Paare positioniert angeordnet ist, wie dies in der Figur 11 beispielsweise und auseinandergezogen dargestellt ist. In beiden Ausführungsfällen bildet die Anordnung ein Scheibenpaket, welches beidseitig von den beiden Übertragungsscheiben 40, 50 eingeschlossen ist, wobei die Kreuzscheiben 45, 55 und die Kurvenscheiben 3, 4 radial auslenkbar beweglich sind.
Es ist ohne weiteres möglich, die Kreuzmitnahme auch durch eine Vertauschung der Mitnehmerzapfen mit den nutartigen Ausnehmungen zu bewirken. So kann die Kreuzscheibe 40, 50 nur Nuten aufweisen und die entsprechende Kurvenscheibe 3, 4 und Übertragungsscheibe 40, 50 Zapfen aufweisen oder alternativ kann die Kreuzscheibe 40, 50 auch nur Zapfen aufweisen und die entsprechenden Nuten sind in den anderen Scheiben ausgebildet oder in gemischter Anordnung vorgesehen werden, solange die benachbarten Scheiben drehgekoppelt werden. Wegen der Kraftverteilung und des Gleichlaufes sind allerdings symmetrische Anordnungen von Vorteil.

Bei der Verwendung von mehr als einer Kurvenscheibe sind diese in der Ausbildung vorzugsweise völlig identisch. Eine Kurvenscheibe 3, 4 ist zur Verdeutlichung in der Figur 8 dargestellt mit der Zentralöffnung 30a, 30b mit deren innen liegenden Gleitfläche 35a, 35b, der Aussenkontur 33, 34 und den Bohrungen 31 für die eine Ausführung mit durchgreifenden Verbindungsmittel 61. Für Nebenfunktionen, wie beispielsweise die Schmierung, können in den Kurvenscheiben 3, 4 und / oder den Kreuzscheiben 45, 55 und / oder den Übertragungsscheiben 40, 50 Nuten vorgesehen sein, wobei diese Nuten nicht in allen eingesetzten Scheiben eingebracht sein müssen.

In den Figuren 3 ist im Querschnitt und in den Figuren 4 bis 6 in dreidimensionaler Ansicht der Rotor 6 dargestellt mit den Exzentern 5a, 5b. Das Beispiel zeigt die bevorzugte Ausführung mit zwei darauf angeordneten Exzentern 5a, 5b welche in die Zentralöffnungen 30a, 30b von zwei Kurvenscheiben 3, 4 eingreifen. Die Exzenter 5a, 5b sind hier um 180° versetzt angeordnet. Bei Verwendung und drei Kurvenscheiben mit drei Exzentern werden diese um 120° versetzt angeordnet. Der Versetzungswinkel wird somit entsprechend der verwendeten Anzahl Kurvenscheiben innerhalb der 360° aufgeteilt.
Die Form der Exzenter 5, die Exzentrizität 22, die Form der Aussenkurve 33, 34 und deren Periodenzahl und die Innenkontur bzw. die Aussenbolzen 19, sowie die Ausgestaltung der Kreuzmitnehmerkupplung werden sorgfältig aufeinander abgestimmt, um den gewünschten ruhigen Gleichlauf zu erreichen bei entsprechend vorgegebenem Übersetzungsverhältnis. Zur Vereinfachung der Montage der Kurvenscheiben 3, 3', 4, können die einzelnen Exzenter 5a, 5b als separate Einzelteile an den Rotor 6 montierbar ausgebildet sein.

Die Trägeranordnung 18 für die Aufnahme der Aussenbolzen 19 zur Ausbildung der Innenkontur 182 ist in den Figuren 4 bis 6 und 9 dargestellt. Die Abtriebswelle 2, die in der Längsachse 8 angeordnet ist, ist drehfest mit einem scheibenförmigen Träger 18 verbunden. An diesem Träger 18 sind radial beabstandet von der Antriebswelle auf einem Kreis gleichmässig verteilt und auskragend Aussenbolzen 19 angeordnet und bilden eine ringförmige Innenkontur 182. Diese sind parallel zur Längsachse 8 ausgerichtet und übergreifen die Aussenkontur 33 der Kurvenscheibe 4. Bei mehreren Kurvenscheiben 3, 4 übergreift jeweils jeder Aussenbolzen 19 die hintereinander angeordneten Aussenkonturen 33, 34 der Kurvenscheiben 3, 4. In diesem Fall sind die Wellenzüge der Aussenkonturen 33, 34 gegeneinander im Rahmen der bewegenden Exzentrizität versetzt, aber immer anliegend und abgleitend an den Aussenbolzen 19, derart dass diese Aussenbolzen 19 und somit die Abtriebswelle mit entsprechend untersetzter Drehzahl mit getrieben wird.
Die Aussenbolzen 19 können sowohl als Gleitlagerteil ausgebildet werden, oder auch bevorzugt rollende Lager enthalten. Auch kann der oder die Exzenter 5 mit einem Gleitlager oder vorzugsweise mit einem rollenden Lager versehen werden. Es kann jedoch aus Gründen des begrenzten Bauraums erforderlich sein, nur gleitende Kontakte, ohne spezielle Lagerungen, vorzusehen.

Entsprechend den Ausführungsbeispielen der Figuren 4 bis 6 und 11 sind die Aussenbolzen 19 mit dem Träger 18 verbunden. Dabei sind die Aussenbolzen im einfachsten Fall in Ausnehmungen des Trägers 18 eingefügt und befestigt. Alternativ zu der in den Figuren 4 bis 6 und 11 dargestellten Ausführungsform ist es möglich, die erfindungsgemässe Lösung mit einem Träger, wie er in der Figur 9 veranschaulicht ist, auszubilden. Die Aussenbolzen 19 können entsprechend auch lose in ein Element 181 mit einer zur Längsachse gerichteten Innenkontur 182, das mit dem Träger 18 verbunden ist, eingelegt sein. In dieser Innenkontur, sind die Aussenbolzen 19 sowohl in radialer Richtung nach aussen als auch in Umfangsrichtung gehalten. Das Element 181 wird über Befestigungselemente 183 mit dem Träger 18 verbunden. Zur Verringerung von Spielen, die aufgrund der Herstelltoleranzen auftreten können, kann das Element 181 auch in axialer Richtung geteilt, als erstes Element 181a und zweites Element 181b, ausgebildet sein und die beiden Teile zueinander in Umfangsrichtung verdreht angeordnet sein, um die Aussenbolzen 19 mit den Aussenkonturen 33, 34 der Kurvenscheiben 3, 4 spielfrei in Kontakt zu bringen. Während der Montage erfolgt zur Einstellung des Laufspiels die entsprechende Verdrehung. Nach der Einstellung des Laufspiels werden die beiden Teile des Elements 181 fixiert, so dass das System eingestellt ist. Anstelle der ringförmig angebrachten Aussenbolzen 19 zur Bildung einer Innenkontur an welcher sich die Kurvenscheibe abwälzt kann auch direkt eine wellenartige Zahnkranzanordnung ausgebildet werden, welche direkt aus dem Grundmaterial herausgearbeitet ist und eine ringförmige Innenkontur 182, 184 aufweist. Die wellenförmige Verzahnung kann, wie bereits erwähnt eine zykloidenartige Form aufweisen, aber auch je nach Bedarf eine Verzahnung, ähnlich einem Innenzahnrad, wie die Innenkontur 184, gezeigt in der Figur 10. Die Wellenform der Innenkontur und der Aussenkontur der Kurvenscheibe sind jeweils entsprechend aufeinander abgestimmt.

Die bevorzugte Ausbildung eines Kurvenscheibengetriebes mit zwei Kurvenscheiben 3, 4 und mit einer Kreuzmitnehmerkupplung ist im Querschnitt in der Figur 3 dargestellt. Die erste Welle, die Antriebswelle 1 mit der sich im Zentrum befindenden Drehachse 8 ist um diese drehbar an der chassisfesten Trägeranordnung 11 gelagert angeordnet. Koaxial über der Antriebswelle 1 befindet sich ein Lager 13 zur drehbeweglichen Lagerung des Rotors 6. An diesem Rotor 6 sind, vorzugsweise an einem Ende des Rotorwellenstückes, zwei Exzenter 5a, 5b angeordnet. Aus der Figur 3 ist bei dieser Querschnittsdarstellung der zweite Exzenter 5b sichtbar der in die Zentralöffnung 30a, 30b der zugehörigen zweiten Kurvenscheibe 3 eingreift und dort an dessen inneren Fläche 35a, 35b abgleitet oder abrollt. Der erste Exzenter 5a mit der ersten Kurvenscheibe 4 liegt unmittelbar neben dem zweiten Exzenter 5b. Die beiden Exzenter 5a, 5b sind um 180° in Rotationsrichtung versetzt auf dem Rotor 6 fixiert angeordnet. Die Exzenter 5a, 5b sind vorzugsweise als kreisrunde um die Exzentrizität 22 exzentrisch angeordnete Scheiben ausgebildet. Die beiden Kurvenscheiben 3, 4 mit den zugehörigen Aussenkonturen 33, 34 zwischen den Zentralöffnungen und den Aussenkonturen liegen lateral zur Zentralachse 8 um die Exzentrizität versetzt entsprechend der Lage der beiden Exzenter 5a, 5b. Die Kreuzmitnehmerkupplung mit den Übertragungsscheiben 40, 50 und den Kreuzscheiben 45, 55 koppelt die beiden dazwischen angeordneten Kurvenscheiben 3, 4, wie zuvor beschrieben mit der Antriebswelle 1, derart dass die Kurvenscheiben bei Drehung der Antriebswelle 1 mit drehen und die exzentrische Bewegung zugelassen wird und überlagert wird.
Durch die exzentrische Bewegung der Kurvenscheiben 3, 4 gleiten oder rollen die Wellenzüge der Aussenkonturen 33, 34 der beiden Kurvenscheiben 3, 4 an den kranzförmig um diese angeordneten Aussenbolzen 19 ab. Die Aussenbolzen 19 sind auf einem Teilkreis gleichmässig verteilt um das Drehzentrum 8 am zweiten Träger 18 angeordnet der drehfest mit der Abtriebswelle 2 verbunden. Die Anzahl der Perioden, also der Erhebungen mit den Senken, des Wellenzuges der Aussenkontur 33, 34 der Kurvenscheiben 3, 4 ist jeweils um eins geringer als die Anzahl der Aussenbolzen 19. Im vorgestellten Beispiel weist der Wellenzug der beiden Kurvenscheiben elf Perioden auf, wobei an dem Träger 18 zwölf Aussenbolzen 19 angeordnet sind. Die Anzahl der Perioden der Aussenkontur 33, 34 der Kurvenscheiben 3, 4 bestimmt das Übersetzungsverhältnis des Kurvenscheibengetriebes. Bei dem hier dargestellten Beispiel muss die Rotorwelle 6 mit den Exzentern 5a, 5b elf mal gedreht werden um an der Abtriebswelle 2 eine Umdrehung zu erzielen. Das Übersetzungsverhältnis beträgt somit für diesen Fall 1:11. Für die Anwendung des vorgestellten Kurvenscheibengetriebes in einer Fahrzeuglenkvorrichtung werden mit Vorteil Übersetzungsverhältnisse, die im Bereich von 1:11 bis 1: 64 liegen vorgesehen.

Eine wesentlich bevorzugte Ausbildung der Drehzahlüberlagerungseinrichtung 100 weist einen in die Trägeranordnung 11 bzw. in ein Gehäuse 11 a, 11 b integrierten Elektromotorantrieb 102 auf, wie dies in der Figur 3 dargestellt ist. Der Elektromotor 102 ist hierbei mit Vorteil ein elektronisch kommutierter Motor und koaxial um die Längsachse 8 der Anordnung angeordnet. Der Koaxial zu der Antriebswelle 1 mit den Lagern 13, 14 drehbar gelagerte Rotor 6 bildet hierbei gleichzeitig der Rotor 6 des Elektromotors 102, auf welchem Permanentmagnete angeordnet sind. Ein Stator 7 mit den Statorwicklungen 305 umgibt, Gehäusefest angeordnet, den Rotor 6. Am Gehäuse 11 der Anordnung sind Anschlüsse 9 vorgesehen zum Anschluss der Motorspeisung und wahlweise für die Übertragung von Messsignale, wie beispielsweise eine oder mehrere der Drehzahlen der Antriebswelle 1, der Abtriebswelle 2 und/oder des Rotors 6 und / oder der Drehwinkelverstellung. Die Signale können dann an das Steuergerät 128 weitergeleitet werden, so dass daraus die Steuerung des Hilfsantriebes oder auch anderer hier nicht dargestellter Baugruppen im Fahrzeug, wie ein Antiblockiersystem, angesteuert wird. Diese integrierte Motoranordnung kombiniert mit dem Kurvenscheibengetriebe mit Kreuzmitnehmerkupplung lässt sich besonders einfach und kompakt als Baueinheit realisieren, bei gutem Wirkungsgrad und geringer Geräuschentwicklung. Ein weiterer Vorteil der Anordnung besteht in der bevorzugten Ausführungsform darin, dass sich die Anordnung nicht mit dem Steuerrad 120 mit dreht und die Trägeranordnung 11 bzw. das Gehäuse 11 chassisfest am Chassis 400 bzw. am Fahrgestell des Fahrzeuges fixiert ist.

Ein weiterer wichtiger Vorteil der erfindungsgemässen Lösung besteht darin, dass die Trägeranordnung 11a, 11b bzw. das Gehäuse 11 nur eine Lagerungsfunktion für die Getriebeglieder übernimmt und nicht selbst eines der Getriebeglieder darstellt. Dadurch werden keine Impulse, durch den Kontakt der Getriebeglieder beim Eingriffswechsel unmittelbar auf das Gehäuse übertragen. Weiter ist es problemlos möglich das Gehäuse 11 aus schalldämmendem Material, wie beispielsweise aus mehreren Lagen von Blech und/oder Kunststoff, zu bilden. Entsprechend kann das Gehäuse mit schalldämmenden Zwischenelementen (beispielsweise Gummilager) am Chassis 400 befestigt werden.

Dieselben Vorteile können auch für die Ausführungsform der Erfindung, bei der das Antriebssystem 100" als elektrische Hilfskrafteinrichtung angewendet wird, und die Antriebswelle 1 als Haltewelle 1' ausgebildet ist, indem diese mit dem Gehäuse 11 oder einem Teil der Trägeranordnung 11a, 11b drehfest verbunden wird, erreicht werden.

Obwohl die integrierte Bauweise des Motorantrieb 102 kombiniert mit dem Kurvenscheibengetriebe mit der Kreuzmitnehmerkupplung bevorzugt ist, kann in gewissen Fällen auch der Betrieb des mit einem extern angeordneten Antrieb sinnvoll sein.
Eine weitere bevorzugte Ausführungsform der Drehzahlüberlagerungseinrichtung umfasst zusätzlich eine Sicherheitskupplung oder eine Verriegelungseinrichtung, die auch als Sicherheitsbremse ausgebildet sein kann. insbesondere bei der Ausführung mit integriertem Elektromotor 102 als Hilfsantrieb. Eine Sicherheitskupplung kann hier sehr einfach gestaltet werden, da durch den Aufbau der Drehzahlüberlagerungseinrichtung eine einfache Verriegelung des Gehäuses 11 mit dem Rotor 6 des Hilfsantriebes 102 ausreicht, um eine vollständige Kopplung der Drehzahl des Steuerrades 120 mit der Drehzahl der Abtriebswelle 2 und somit die vollständige Kontrolle des Fahrers über das Lenksystem, auch im Fehlerfall, zu gewährleisten.

In einer Weiterbildung der Erfindung ist eine Schmierung des Getriebes vorgesehen. Hierzu werden in den Exzentern 5a, 5b radiale Bohrungen vorgesehen, die einen Schmiermitteltransport ermöglichen. Dadurch werden die Kontaktflächen 35a, 35b der Zentralöffnung 30a, 30b und die Aussenflächen der Exzenter 5a, 5b sowie, falls vorhanden, dazwischen liegender Wälzkörper mit Schmiermittel versorgt. Es ist auch möglich, in den Scheiben, wie an den Kurvenscheiben, Kreuzscheiben und an den Übertragungsscheiben bzw. an deren Oberfläche einzelne oder mehrere Rinnen, nach Bedarf, zur Schmiermittelzuführung vorzusehen, um die gleitenden Bereiche zwischen den Scheiben auch weiter aussen liegende Getriebekontakte mit Schmiermittel zu versorgen. Dies ist im Fall, dass die Scheiben aus lamellenartig zusammengefassten Paketen gebildet sind, besonders einfach und kostengünstig darstellbar.

## Patentansprüche

1. Fahrzeuglenkvorrichtung für ein Kraftfahrzeug mit einem Antrieb (102), der über ein Kurvenscheibengetriebe (3, 4, 5, 18, 19) mit einer Abtriebswelle (2) mit der Längsachse (8) mit einem Lenkgetriebe (122) verbunden ist, wobei das Kurvenscheibengetriebe umfasst:
- mindestens eine um die Längsachse (8) exzentrisch rotierbar angeordnete Kurvenscheibe (3, 4) mit einer wellenartigen Aussenkontur (33, 34);
- die mindestens eine Kurvenscheibe (3, 4) eine Zentralöffnung (30a, 30b) im Zentrum aufweist;
- eine Rotorwelle (6) koaxial drehbar um eine erste Welle (1) mit der gemeinsamen Längsachse (8), in einer Trägeranordnung (11, 11a, 11 b) und an der ersten Welle (1) gelagert angeordnet und diese mit dem Antrieb (7, 102) verbunden ist und mindestens einen Exzenter (5a, 5b) trägt mit einer Exzentrizität (22) gegenüber der Längsachse (8), wobei jeder Exzenter (5a, 5b) in die Zentralöffnung (30a, 30b) einer zugeordneten Kurvenscheibe (3, 4) eingreift zur Erzeugung einer um die Längsachse (8) rotierenden lateral taumelnden Bewegung der jeweiligen Kurvenscheibe (3, 4);
- einen Träger (18) angeordnet an einer zweiten Welle (2), die als Abtriebswelle (2) ausgebildet ist, die drehbar gelagert in der Trägereinrichtung (11, 11a, 11 b) um die Längsachse (8) rotierbar angeordnet ist, wobei an dem Träger (18) in paralleler Richtung zur Längsachse (8) auskragend eine die Kurvenscheibe (3, 4) umschliessende wellenförmige Innenkontur (19, 19a) angeordnet ist, an der sich die wellenförmige Aussenkontur (33, 34) der mindestens einen Kurvenscheibe (3, 4) durch die exzentrische radial taumelnde Bewegung abwälzt,
**dadurch gekennzeichnet, dass** in axialer Richtung beabstandet zu mindestens einer Kurvenscheibe (3, 4) mindestens eine Übertragungsscheibe (40, 50) angeordnet ist, welche drehfest mit der ersten Welle (1) verbunden ist, und dass zwischen einer Kurvenscheibe (3, 4) und einer Übertragungsscheibe (40, 50) eine Kreuzscheibe (45, 55) mit einer zentralen Öffnung (49, 59) angeordnet ist, durch welche die erste Welle (1) hindurch führt, derart dass diese Kreuzscheibe (45, 55) radial zu dieser Welle beweglich ist, wobei in paralleler Richtung zur Längsachse (8) an jeder der mindestens einen Kurvenscheibe (3, 4) zwei einander symmetrisch zu deren Zentrum gegenüberliegende Mitnehmerzapfen (48, 58) angeordnet sind, die in korrespondierende schlitzförmige Kreuzscheibenausnehmungen (46, 56) der zugehörigen Kreuzscheibe (45, 55) radial zu deren Zentrum beweglich eingreifen, und dass auf der von der Kurvenscheibe (3, 4) abgewandten Seite der Kreuzscheibe (45, 46) zwei weitere einander symmetrisch zu deren Zentrum gegenüberliegende Mitnehmerzapfen (47, 57) angeordnet sind, derart dass diese gegenüber deren Kreuzscheibenausnehmungen (46, 56) um 90° um deren Zentrum versetzt angeordnet sind, wobei diese in korrespondierende schlitzförmige Übertragungsscheibenausnehmungen (41, 51) der zugehörigen Übertragungsscheibe (40, 50) radial zu deren Zentrum beweglich eingreifen, derart dass in radialer Richtung zur Längsachse in jeder Wellenposition die mindestens eine Kurvenscheibe (3, 4) über die Übertragungsscheibe (40, 50) durch die erste Welle (1) in Drehrichtung angetrieben werden.

2. Fahrzeuglenkvorrichtung für ein Kraftfahrzeug mit einem Antrieb (102), der über ein Kurvenscheibengetriebe (3, 4, 5, 18, 19) mit einer Abtriebswelle (2) mit der Längsachse (8) mit einem Lenkgetriebe (122) verbunden ist, wobei das Kurvenscheibengetriebe umfasst:
- mindestens eine um die Längsachse (8) exzentrisch rotierbar angeordnete Kurvenscheibe (3, 4) mit einer wellenartigen Aussenkontur (33, 34);
- die mindestens eine Kurvenscheibe (3, 4) eine kreisrunde Zentralöffnung (30a, 30b) im Zentrum aufweist;
- eine Rotorwelle (6) koaxial drehbar um eine erste Welle (1) mit der gemeinsamen Längsachse (8), in einer Trägeranordnung (11, 11a, 11b) und an der ersten Welle (1) gelagert angeordnet und diese mit dem Antrieb (7, 102) verbunden ist und mindestens einen Exzenter (5a, 5b) trägt mit einer Exzentrizität (22) gegenüber der Längsachse (8), wobei jeder Exzenter (5a, 5b) in die Zentralöffnung (30a, 30b) einer zugeordneten Kurvenscheibe (3, 4) eingreift zur Erzeugung einer um die Längsachse (8) rotierenden lateral taumelnden Bewegung der jeweiligen Kurvenscheibe (3, 4);
- einen Träger (18) angeordnet an einer zweiten Welle (2), die als Abtriebswelle (2) ausgebildet ist, die drehbar gelagert in der Trägereinrichtung (11, 11a, 11b) um die Längsachse (8) rotierbar ist, wobei an dem zweiten Träger (18) in paralleler Richtung zur Längsachse (8) auskragend eine die Kurvenscheibe (3, 4) umschliessende wellenförmige Innenkontur (19, 19a) angeordnet ist, an der sich die wellenförmige Aussenkontur (33, 34) der mindestens einen Kurvenscheibe (3, 4) durch die exzentrische radial taumelnde Bewegung abwälzt,
**dadurch gekennzeichnet, dass** in axialer Richtung beabstandet zu mindestens einer Kurvenscheibe (3, 4) mindestens eine Übertragungsscheibe (40, 50) angeordnet ist, welche drehfest mit der ersten Welle (1) verbunden ist, und dass zwischen einer Kurvenscheibe (3, 4) und einer Übertragungsscheibe (40, 50) eine Kreuzscheibe (45, 55) mit einer zentralen Öffnung (49, 59) angeordnet ist, durch welche die erste Welle (1) hindurch führt, derart dass diese Kreuzscheibe (45, 55) radial zu dieser Welle beweglich ist, wobei in paralleler Richtung zur Längsachse (8) an jeder der mindestens einen Kurvenscheibe (3, 4) zwei einander symmetrisch zu deren Zentrum gegenüberliegende schlitzförmige Mitnehmerausnehmungen angeordnet sind, in die korrespondierende Kreuzscheibenzapfen der zugehörigen Kreuzscheibe (45, 55) radial zu deren Zentrum beweglich eingreifen, und dass auf der von der Kurvenscheibe (3, 4) abgewandten Seite der Kreuzscheibe (45, 46) zwei weitere einander symmetrisch zu deren Zentrum gegenüberliegende schlitzförmige Mitnehmerausnehmungen angeordnet sind, derart dass diese gegenüber deren Kreuzscheibenzapfen um 90° um deren Zentrum versetzt angeordnet sind, wobei in diese korrespondierende schlitzförmige Übertragungsscheibenzapfen der zugehörigen Übertragungsscheibe (40, 50) radial zu deren Zentrum beweglich eingreifen, derart dass in radialer Richtung zur Längsachse in jeder Wellenposition die mindestens eine Kurvenscheibe (3, 4) über die Übertragungsscheibe (40, 50) durch die erste Welle (1) in Drehrichtung angetrieben werden.

3. Fahrzeuglenkvorrichtung nach Anspruch 1 oder 2, **dadurch gekennzeichnet, dass** die Vorrichtung zwei Übertragungscheiben (40, 50) aufweist, zwischen denen die mindestens eine Kurvenscheibe (3, 4) axial angeordnet ist.

4. Fahrzeuglenkvorrichtung nach einem der vorhergehenden Ansprüche, **dadurch gekennzeichnet, dass** die eine Übertragungscheibe (50) fest mit der ersten Welle (1) drehbar verbunden ist und diese mit der anderen Übertragungscheibe (40) fest über Verbindungsmittel verbunden ist, welche in paralleler Richtung zur Längsachse (8) über Durchgangsöffnungen (31, 60) der mindestens einen Kurvenscheibe (3, 4) und der mindestens einen Kreuzscheibe (45, 55) hindurch geführt sind, wobei die Verbindungsmittel vorzugsweise mindestens zwei gegenüberliegende Verbindungszapfen (61) sind und die Durchgangsöffnungen (31, 60) gross genug sind zur Zulassung der Auslenkung der Exzentrizität (22).

5. Fahrzeuglenkvorrichtung nach einem der vorhergehenden Ansprüche, **dadurch gekennzeichnet, dass** im Fall, dass mehrere Kurvenscheiben (3, 4) eingesetzt sind, deren Aussenkonturen (33, 34) mit wellenartigen Erhebungen und Vertiefungen zueinander versetzt angeordnet sind, derart dass die Aussenkonturen (33, 34) aller Kurvenscheiben (3, 4) an der Innenkontur (19, 19a) abwälzend anliegen.

6. Fahrzeuglenkvorrichtung nach einem der vorhergehenden Ansprüche, **dadurch gekennzeichnet, dass** für jede Kurvenscheibe (3, 4) ein zugeordneter Exzenter (5a, 5b) vorgesehen ist und diese am Rotor (6) um einen Winkel verdreht angeordnet sind, dessen Wert etwa 360° geteilt durch die Anzahl der Exzenter (5a, 5b) bzw. die Anzahl der eingesetzten Kurvenscheiben (3, 4) beträgt.

7. Fahrzeuglenkvorrichtung nach einem der vorhergehenden Ansprüche, **dadurch gekennzeichnet, dass** die wellenförmige Aussenkontur (33, 34) mindestens teilweise Zykloidenförmig ausgebildet ist.

8. Fahrzeuglenkvorrichtung nach einem der vorhergehenden Ansprüche, **dadurch gekennzeichnet, dass** die Innenkontur durch ringförmig um die Längsachse (8) und zu dieser parallel radial beabstandet am Träger (18) angeordnete Aussenbolzen (19) ausgebildet ist und dass die Aussenbolzen vorzugsweise (19) rollende Lager tragen.

9. Fahrzeuglenkvorrichtung nach einem der vorhergehenden Ansprüche 1 bis 5, **dadurch gekennzeichnet, dass** die wellenförmige Innenkontur (19, 19a) und die Aussenkontur (33, 34) als Zahnkranz ausgebildet ist.

10. Fahrzeuglenkvorrichtung nach einem der vorhergehenden Ansprüche, **dadurch gekennzeichnet, dass** die Mitnehmerzapfen (47, 48, 57, 58) einen runden Querschnitt aufweisen deren Oberfläche als Gleitlagerteil ausgebildet sind.

11. Fahrzeuglenkvorrichtung nach einem der vorhergehenden Ansprüche 1 bis 10, **dadurch gekennzeichnet, dass** die Mitnehmerzapfen (47, 48, 57, 58) eine runden Querschnitt aufweisen rollende Lager tragen.

12. Fahrzeuglenkvorrichtung nach einem der vorhergehenden Ansprüche, **dadurch gekennzeichnet, dass** die Mitnehmerzapfen (47, 48, 57, 58) einen länglichen Querschnitt aufweisen, vorzugsweise im wesentlichen einen rechteckförmigen, deren Oberfläche als Gleitlagerteil ausgebildet sind.

13. Fahrzeuglenkvorrichtung nach einem der vorhergehenden Ansprüche, **dadurch gekennzeichnet, dass** die erste Welle (1) an der Trägeranordnung (11) drehbar um die Längsachse mit Lagern (15, 15') gelagert angeordnet ist und als Antriebswelle (1) ausgebildet ist, welche mit einem Steuerrad (120) verbunden ist und das Kurvenscheibengetriebe zusammen mit dem Antrieb (102) eine Drehzahlüberlagerungsvorrichtung bildet.

14. Fahrzeuglenkvorrichtung nach einem der vorhergehenden Ansprüche, **dadurch gekennzeichnet, dass** die erste Welle (1) und die zweite Welle (2) wahlweise gegeneinander als Antriebswelle oder Abtriebswelle vertauschbar ist.

15. Fahrzeuglenkvorrichtung nach einem der Ansprüche 1 bis 12, **dadurch gekennzeichnet, dass** die erste Welle (1) an der Trägeranordnung (11) nicht drehbar fixiert ist, die Trägeranordnung (11) am Chassis des Kraftfahrzeuges befestigt ist und das Kurvenscheibengetriebe zusammen mit dem Antrieb (102) eine elektrisch unterstützte Lenkhilfe bildet.

## Claims

1. Vehicle steering device for a motor vehicle with a drive (102) which with the longitudinal axis (8) is connected with a steering gear (122) via a cam plate gear (3, 4, 5, 18, 19) with an output shaft (2), wherein the cam plate gear comprises:
- at least one cam plate (3, 4) arranged rotatable eccentrically about the longitudinal axis (8) with an undulating outer contour (33, 34);
- the at least one cam plate (3, 4) comprises a central opening (30a, 30b) in the centre;
- a rotor shaft (6) coaxially rotatable about a first shaft (1) with the common longitudinal axis (8), arranged in a carrier arrangement (11, 11a, 11b) and mounted on the first shaft (1) which is connected with the drive (7, 102) and carries at least one eccentric (5a, 5b) with an eccentricity (22) in relation to the longitudinal axis (8), wherein each eccentric (5a, 5b) engages in the central opening (30a, 30b) of an associated cam plate (3, 4) to generate a lateral tumbling movement of the respective cam plate (3, 4) rotating about the longitudinal axis (8);
- a carrier (18) arranged on a second shaft (2) formed as an output shaft (3) which is arranged mounted rotatably in the carrier arrangement (11, 11a, 11b) rotatable about the longitudinal axis (8), wherein on the carrier (18) protruding in the parallel direction to the longitudinal axis (8) is arranged an undulating inner contour (19, 19a) surrounding the cam plate (3, 4), on which the undulating outer contour (33, 34) of the at least one cam plate (3, 4) rolls due to the eccentric radial tumbling movement,
**characterised in that** spaced from at least one cam plate (3, 4) in the axial direction is arranged at least one transfer plate (40, 50) which is connected rotationally stationary with the first shaft (1), and that between a cam plate (3, 4) and a transfer plate (40, 50) is arranged a cross plate (45, 55) with a central opening (49, 59) through which passes the first shaft (1), such that this cross plate (45, 55) is mobile radial to this shaft, where in the parallel direction to the longitudinal axis (8) on each of the at least one cam plate (3, 4) are arranged two carrier pegs (48, 58) symmetrically opposite at their centres, which engage in corresponding slotted cross plate recesses (46, 56) of the associated cross plate (45, 55) mobile radial to their centres, and that on the side of the cross plate (45, 46) facing away from the cam plate (3, 4) are arranged two further carrier pegs (47, 57) symmetrically opposite at their centres, such that these are arranged offset by 90° at their centres in relation to their cross plate recesses (46, 56), wherein these engage in corresponding slotted transfer plate recesses (41, 51) of the associated transfer plate (40, 50) mobile radial to their centres such that in the radial direction to the longitudinal axis, in each shaft position the at least one cam plate (3, 4) is driven in the rotation direction by the first shaft (10) via the transfer plate (40, 50).

2. Vehicle steering device for a motor vehicle with a drive (102) which with the longitudinal axis (8) is connected with a steering gear (122) via a cam plate gear (3, 4, 5, 18, 19) with an output shaft (2), wherein the cam plate gear comprises:
- at least one cam plate (3, 4) arranged rotatable eccentrically about the longitudinal axis (8) with an undulating outer contour (33, 34);
- the at least one cam plate (3, 4) comprises a central opening (30a, 30b) in the centre;
- a rotor shaft (6) coaxially rotatable about a first shaft (1) with the common longitudinal axis (8), arranged in a carrier arrangement (11, 11a, 11b) and mounted on the first shaft (1) which is connected with the drive (7, 102) and carries at least one eccentric (5a, 5b) with an eccentricity (22) in relation to the longitudinal axis (8), wherein each eccentric (5a, 5b) engages in the central opening (30a, 30b) of an associated cam plate (3, 4) to generate a lateral tumbling movement of the respective cam plate (3, 4) rotating about the longitudinal axis (8);
- a carrier (18) arranged on a second shaft (2) formed as an output shaft (3) which is arranged mounted rotatably in the carrier arrangement (11, 11a, 11b) rotatable about the longitudinal axis (8), wherein on the second carrier (18) protruding in the parallel direction to the longitudinal axis (8) is arranged an undulating inner contour (19, 19a) surrounding the cam plate (3, 4), on which the undulating outer contour (33, 34) of the at least one cam plate (3, 4) rolls due to the eccentric radial tumbling movement,
**characterised in that** spaced from at least one cam plate (3, 4) in the axial direction is arranged at least one transfer plate (40, 50) which is connected rotationally stationary with the first shaft (1), and that between a cam plate (3, 4) and a transfer plate (40, 50) is arranged a cross plate (45, 55) with a central opening (49, 59) through which passes the first shaft (1), such that this cross plate (45, 55) is mobile radial to this shaft, where in the parallel direction to the longitudinal axis (8) on each of the at least one cam plate (3, 4) are arranged two slotted carrier recesses symmetrically opposite at their centres, in which engage the corresponding cross plate pegs of the associated cross plate (45, 55) mobile radial to their centres, and that on the side of the cross plate (45, 46) facing away from the cam plate (3, 4) are arranged two further slotted carrier recesses symmetrically opposite at their centres, such that these are arranged offset by 90° at their centres in relation to their cross plate pegs, wherein these engage corresponding slotted transfer plate pegs of the associated transfer plate (40, 50) mobile radial to their centres such that in the radial direction to the longitudinal axis, in each shaft position the at least one cam plate (3, 4) is driven in the rotation direction by the first shaft (10) via the transfer plate (40, 50).

3. Vehicle steering device according to claim 1 or 2, **characterised in that** the device comprises two transfer plates (40, 50) between which the at least one cam plate (3, 4) is arranged axially.

4. Vehicle steering device according to any of the preceding claims, **characterised in that** the one transfer plate (50) is firmly connected rotatably with the first shaft (1) and this is firmly connected with the other transfer plate (40) via connecting means which in the parallel direction to the longitudinal axis (8) are guided through passage openings (31, 60) of the at least one cam plate (3, 4) and the at least one cross plate (45, 55), wherein the connecting means are preferably at least two opposite connecting pegs (61) and the passage openings (31, 60) are sufficiently large to allow the deflection of the eccentricity (22).

5. Vehicle steering device according to any of the preceding claims, **characterised in that** in the case that several curved plates (3, 4) are used, their outer contours (33, 34) with undulating protrusions and recesses are arranged offset to each other such that the outer contours (33, 34) of all cam plates (3, 4) lie rolling on the inner contour (19, 19a).

6. Vehicle steering device according to any of the preceding claims, **characterised in that** for each cam plate (3, 4) an associated cam (5, 5a) is provided and these are arranged twisted on the rotor (6) through an angle, the value of which is around 360° divided by the number of eccentrics (5a, 5b) or the number of curve plates (3, 4) used.

7. Vehicle steering device according to any of the preceding claims, **characterised in that** the undulating outer contour (33, 34) is formed cycloid at least in parts.

8. Vehicle steering device according to any of the preceding claims, **characterised in that** the inner contour is formed by outer bolts (19) arranged ring-like about the longitudinal axis (8) and parallel to this radially spaced on the carrier (18) and that the outer bolts preferably carry rolling bearings (19).

9. Vehicle steering device according to any of the preceding claims 1 to 5, **characterised in that** the undulating inner contour (19, 19a) and the outer contour (33, 34) are formed as a crown gear.

10. Vehicle steering device according to any of the preceding claims, **characterised in that** the carrier pegs (47, 48, 57, 58) have a round cross section, the surface of which is formed as a plain bearing part.

11. Vehicle steering device according to any of the preceding claims 1 to 10, **characterised in that** the carrier pegs (47, 48, 57, 58) have a round cross section carrying rolling bearings.

12. Vehicle steering device according to any of the preceding claims, **characterised in that** the carrier pegs (47, 48, 57, 58) have an oblong cross section, preferably substantially rectangular, the surface of which is formed as a plain bearing part.

13. Vehicle steering device according to any of the preceding claims, **characterised in that** the first shaft (1) is mounted on the carrier arrangement (11) rotatable about the longitudinal axis on bearings (15, 15') and is formed as a drive shaft (1) which is connected with a control wheel (120) and the cam plate gear together with the drive (102) forms a rotation speed overlay device.

14. Vehicle steering device according to any of the preceding claims, **characterised in that** the first shaft (1) and the second shaft (2) are mutually interchangeable optionally as the drive shaft or output shaft.

15. Vehicle steering device according to any of the preceding claims 1 to 12, **characterised in that** the first shaft (1) is fixed non-rotatably on the carrier arrangement (11), the carrier arrangement (11) is attached to the chassis of the motor vehicle and the cam plate gear together with the drive (102) forms an electrically-assisted steering aid.

## Revendications

1. Dispositif de direction de véhicule pour automobile, comportant un actionneur (102) qui est connecté à un mécanisme de direction (122) par l'intermédiaire d'une commande à came (3, 4, 5, 18, 19) à arbre mené (2) centré sur l'axe longitudinal (8),
dans lequel la commande à came comprend :
au moins une came (3, 4) à contour externe crénelé (33, 34), disposée à rotation de manière excentrique autour de l'axe longitudinal (8) ;
ladite au moins une came (3, 4) comportant en son centre une ouverture centrale (30a, 30b) ;
un arbre (6) de rotor qui est monté coaxialement à l'axe longitudinal (8) à rotation autour d'un premier arbre (1) dans un dispositif porteur (11, 11 a, 11b) et sur le premier arbre (1), ce dernier étant lié à l'actionneur (102), et qui porte au moins un excentrique (5a, 5b) à excentricité (22) par rapport à l'axe longitudinal (8), chaque excentrique (5a, 5b) étant en prise dans l'ouverture centrale (30a, 30b) avec une came associée (3, 4) pour générer un mouvement de nutation latérale de la came correspondante (3, 4) en rotation autour de l'axe longitudinal (8) ;
un support (18) disposé sur un deuxième arbre (2) qui constitue l'arbre mené (2) et est monté dans le dispositif porteur (11, 11 a, 11 b) à rotation autour de l'axe longitudinal (8), portant un contour interne crénelé (19, 19a) qui se dispose en saillie dudit support (18) en direction parallèle à l'axe longitudinal (8) autour de la came (3, 4) et sur lequel le contour externe crénelé (33, 34) de la au moins une came (3, 4) roule sous l'effet du mouvement de nutation radiale excentrique;
**caractérisé en ce qu'**à distance d'au moins une came (3, 4) en direction axiale il est prévu au moins une came de transmission (40, 50) qui est liée non rotative au premier arbre (1) et **en ce qu'**une came cruciforme (45, 55) à ouverture centrale (49, 59) traversée par le premier arbre (1) est disposée entre une came (3, 4) et une came de transmission (40, 50) de telle manière que cette came cruciforme (45, 55) soit mobile radialement par rapport à cet arbre, deux tourillons entraîneurs (48, 58) étant présents qui se disposent en direction parallèle à l'axe longitudinal (8) sur chacune des au moins une came (3, 4) en des positions symétriques diamétralement opposées et qui viennent en prise en mouvement radial dans des évidements en fente coopérants (46, 56) de la came cruciforme correspondante (45, 55), et **en ce qu'**il est prévu deux autres tourillons entraîneurs (47, 57) qui sont disposés symétriques diamétralement opposés sur le côté de la came cruciforme (45, 55) opposé à la came (3, 4) d'une manière telle qu'ils soient angulairement décalés de 90 degrés par rapport aux évidements (46, 56) de la came cruciforme correspondante et qui viennent en prise en déplacement radial dans des évidements de came de transmission coopérants (41, 51) ménagés en forme de fentes dans la came de transmission correspondante (40, 50), de sorte que pour chaque position d'arbre, la au moins une came (3, 4) se trouve entraînée par ledit premier arbre (1) en direction radiale de l'axe longitudinal par l'intermédiaire de la came de transmission (40, 50).

2. Dispositif de direction de véhicule pour automobile, comportant un actionneur (102) qui est connecté à un mécanisme de direction (122) par l'intermédiaire d'une commande à came (3, 4, 5, 18, 19) à arbre mené (2) centré sur l'axe longitudinal (8),
dans lequel la commande à came comprend :
au moins une came (3, 4) à contour externe crénelé (33, 34), disposée à rotation de manière excentrique autour de l'axe longitudinal (8) ;
la au moins une came (3, 4) comportant en son centre une ouverture centrale circulaire (30a, 30b) ;
un arbre (6) de rotor qui est monté coaxialement à l'axe longitudinal (8) à rotation autour d'un premier arbre (1) dans un dispositif porteur (11, 11 a, 11 b) et sur le premier arbre (1), qui est lié à l'actionneur (102), et qui porte au moins un excentrique (5a, 5b) à excentricité (22) par rapport à l'axe longitudinal (8), chaque excentrique (5a, 5b) étant en prise dans l'ouverture centrale (30a, 30b) avec une came associée (3, 4) pour générer un mouvement de nutation latérale de la came correspondante (3, 4) en rotation autour de l'axe longitudinal (8) ;
un support (18) disposé sur un deuxième arbre (2) qui constitue l'arbre mené (2) et est monté dans le dispositif porteur (11, 11 a, 11 b) à rotation autour de l'axe longitudinal (8), portant un contour interne crénelé (19, 19a) qui se dispose en saillie dudit support (18) en direction parallèle à l'axe longitudinal (8) autour de la came (3, 4) et sur lequel le contour externe crénelé (33, 34) de la au moins une came (3, 4) roule sous l'effet du mouvement de nutation radiale excentrique ;
**caractérisé en ce qu'**à distance d'au moins une came (3, 4) en direction axiale il est prévu au moins une came de transmission (40, 50) qui est liée au premier arbre (1) sans possibilité de rotation et qu'une came cruciforme (45, 55) à ouverture centrale (49, 59) traversée par le premier arbre (1) est disposée entre une came (3, 4) et une came de transmission (40, 50) de telle manière que cette came cruciforme (45, 55) soit mobile radialement par rapport à cet arbre, deux évidements entraîneurs en forme de fentes étant ménagés symétriquement par rapport au centre en direction parallèle à l'axe longitudinal (8) sur chacune des au moins une came (3, 4), dans lesquels s'engagent radialement des tourillons coopérants de la came cruciforme correspondante (45, 55), et **en ce qu'**il est prévu deux autres évidements entraîneurs en forme de fentes symétriquement opposés l'un à l'autre par rapport à leur centre qui sont disposés sur le côté de la came cruciforme (45, 55) opposé à la came (3, 4) en des positions angulairement décalées de 90 degrés par rapport aux tourillons de la came cruciforme correspondante et dans lesquels s'engagent en direction radiale des tourillons coopérants portés symétriquement par la came de transmission correspondante (40, 50), de telle sorte que pour chaque position d'arbre, la au moins une came (3, 4) se trouve entraînée par ledit premier arbre (1) en direction radiale de l'axe longitudinal par l'intermédiaire de la came de transmission (40, 50).

3. Dispositif de direction de véhicule selon la revendication 1 ou 2, **caractérisé en ce qu'**il comprend deux cames de transmission (40, 50), entre lesquelles est axialement disposée la au moins une came (3, 4).

4. Dispositif de direction de véhicule selon l'une quelconque des revendications précédentes, **caractérisé en ce que** la première came de transmission (50) est lié en rotation au premier arbre (1) et **en ce que** celui-ci est rendu solidaire de l'autre came de transmission (40) par l'intermédiaire de moyens de liaison qui traversent, en direction parallèle à l'axe longitudinal (8), des ouvertures de passage (31, 60) de la au moins une came (3, 4) et de la au moins une came cruciforme (45, 55), les moyens de liaison étant de préférence constitués d'au moins deux tourillons de connexion opposés (61) et les ouvertures de passage (31, 60) étant suffisamment grandes pour permettre l'excursion de l'excentricité (22).

5. Dispositif de direction de véhicule selon l'une quelconque des revendications précédentes, **caractérisé en ce que**, dans le cas où plusieurs cames (3, 4) sont employées, leurs contours externes crénelé (33, 34), à bosses et creux, sont respectivement décalés d'une manière telle que les contours externes (33, 34) de toutes les cames (3, 4) reposent en roulant sur le contour interne (19, 19a).

6. Dispositif de direction de véhicule selon l'une quelconque des revendications précédentes, **caractérisé en ce qu'**il est associé un excentrique (5a, 5b) à chaque came (3, 4) et **en ce que** ceux-ci sont disposés sur le rotor (6) décalés d'un angle dont la valeur est égale au quotient de 360 degrés par le nombre des excentriques (5a, 5b), et donc aussi le nombre des cames employées (3, 4).

7. Dispositif de direction de véhicule selon l'une quelconque des revendications précédentes, **caractérisé en ce que** la forme du contour externe crénelé (33, 34) est au moins partiellement cycloïdale.

8. Dispositif de direction de véhicule selon l'une quelconque des revendications précédentes, **caractérisé en ce que** le contour interne consiste en des chevilles (19) disposées saillantes sur le support (18) en répartition annulaire autour de l'axe longitudinal (8) et parallèles à distance radiale de celui-ci, et **en ce que** ces chevilles saillantes (19) portent de préférence des paliers roulants.

9. Dispositif de direction de véhicule selon l'une quelconque des revendications 1 à 5, **caractérisé en ce que** le contour interne crénelé (19, 19a) et le contour externe (33, 34) consistent en couronnes dentées.

10. Dispositif de direction de véhicule selon l'une quelconque des revendications précédentes, **caractérisé en ce que** les tourillons entraîneurs (47, 48, 57, 58) présentent une section transversale ronde dont la surface constitue un segment de palier lisse.

11. Dispositif de direction de véhicule selon l'une quelconque des revendications 1 à 9, **caractérisé en ce que** les tourillons entraîneurs (47, 48, 57, 58) présentent une section transversale ronde portant des paliers roulants.

12. Dispositif de direction de véhicule selon l'une quelconque des revendications précédentes, **caractérisé en ce que** les tourillons entraîneurs (47, 48, 57, 58) présentent une section allongée, de préférence sensiblement rectangulaire, dont la surface forme un segment de palier lisse.

13. Dispositif de direction de véhicule selon l'une quelconque des revendications précédentes, **caractérisé en ce que** le premier arbre (1) est monté sur des paliers (15, 15') à rotation autour de l'axe longitudinal par rapport au dispositif porteur (11) en constituant l'arbre menant (1) connecté à un volant de direction (120), et **en ce que** la commande à came forme avec l'actionneur (102) un dispositif à superposition de vitesses de rotation.

14. Dispositif de direction de véhicule selon l'une quelconque des revendications précédentes, **caractérisé en ce que** le premier arbre (1) et le deuxième arbre (2) sont interchangeables comme arbre menant et arbre mené.

15. Dispositif de direction de véhicule selon l'une quelconque des revendications 1 à 12, **caractérisé en ce que** le premier arbre (1) est monté non rotatif sur le dispositif porteur (11), **en ce que** le dispositif porteur (11) est fixé au châssis du véhicule et **en ce que** la commande à came forme avec l'actionneur (102) une commande de direction assistée électriquement.
